(19) Europäisches Patentamt
European Patent Office
Office européen des brevets

(11) **EP 2 548 626 A1**

(12) **EUROPEAN PATENT APPLICATION**
published in accordance with Art. 153(4) EPC

(43) Date of publication:
**23.01.2013 Bulletin 2013/04**

(51) Int Cl.:
***B01D 39/20*** (2006.01)   ***B01J 35/04*** (2006.01)
***B01J 35/10*** (2006.01)   ***F01N 3/02*** (2006.01)

(21) Application number: **11756365.0**

(22) Date of filing: **16.03.2011**

(86) International application number:
**PCT/JP2011/056272**

(87) International publication number:
**WO 2011/115181 (22.09.2011 Gazette 2011/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2010   JP 2010063729**

(71) Applicant: **Sumitomo Chemical Company, Limited
Tokyo 104-8260 (JP)**

(72) Inventors:
• **KOBASHI Yasuharu
Niihama-shi
Ehime 792-0009 (JP)**

• **TOHMA Tetsuro
Niihama-shi
Ehime 792-0002 (JP)**
• **IWASAKI, Kentaro
Niihama-shi
Ehime 7920866 (JP)**

(74) Representative: **Vossius & Partner
Siebertstrasse 4
81675 München (DE)**

(54) **PROCESS FOR PRODUCTION OF HONEYCOMB STRUCTURE, HONEYCOMB STRUCTURE, AND PARTICULATE FILTER**

(57)     A method of manufacturing a honeycomb structure comprises a step of forming a molded article by molding a raw material containing a ceramic powder and a pore-forming agent; and a step of manufacturing a honeycomb structure by sintering the molded article, wherein the pore-forming agent is powder formed of a material that disappears at a sintering temperature or less where the molded article is sintered, the powder is obtained by mixing a small particle size powder and a large particle size powder, a median particle size of which a ratio of a cumulative mass with respect to a total mass of the small particle size powder is 50% is 5 to 20 $\mu$m, a median particle size of which a ratio of a cumulative mass with respect to a total mass of the large particle size powder is 50% is 30 $\mu$m or more, and a ninety-percentage particle size of which a ratio of a cumulative mass with respect to a total mass of the large particle size powder is 90% is 80 $\mu$m or less.

**Fig.1**

**Description**

**Technical Field**

The present invention relates to a honeycomb structure manufacturing method, a honeycomb structure, and a particulate filter. Specifically, the invention relates to a particulate filter which achieves purification of an exhaust gas by collecting fine particles such as soot in the exhaust gas discharged from an internal-combustion engine such as a diesel engine or a gasoline engine, a honeycomb structure which is appropriately used as a ceramic filter like the particulate filter, and a manufacturing method thereof.

**Background Art**

As a ceramic filter which removes an object to be collected from a fluid containing the object to be collected, there are known an exhaust gas filter which purifies an exhaust gas discharged from an internal-combustion engine; a filtration filter used for filtration of food, drink and the like; a selective permeation filter through which a gas component selectively permeates; and the like. For example, currently, in a diesel engine as an internal-combustion engine, a cylindrical ceramic honeycomb structure is generally used as a diesel particulate filter which collects fine particles (particulates) such as soot contained in an exhaust gas. In such a particulate filter, a honeycomb structure has a function of collecting soot by alternately plugging openings of both axial ends of the honeycomb structure (see Patent Literature 1 below).

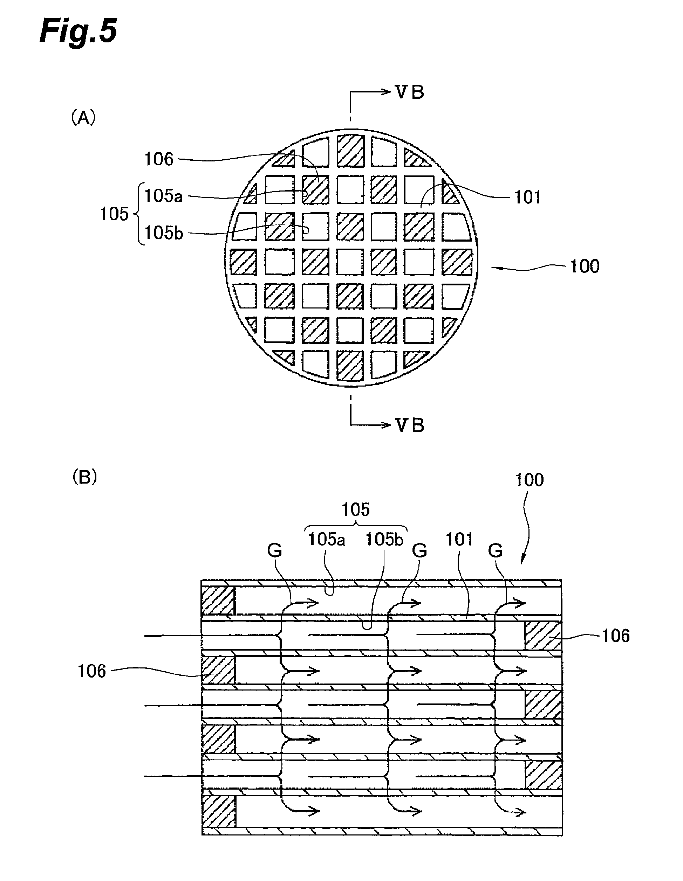

Specifically, as shown in Figs. 5(A), (B), a ceramic honeycomb structure 100 comprises a plurality of through-holes (hereinafter, referred to as a "cell" depending on some cases) 105 which penetrate the honeycomb structure 100 in the axial direction, and the adjacent through-holes 105 are divided by a partition wall (wall surface) 101. The partition wall 101 which forms a honeycomb is formed so that a gas can pass through the inside of the partition wall 101. The opening of either axial end of each through-hole 105 of the honeycomb structure 100 is plugged by a plugging material 106. Then, as shown in Fig. 5, the respective cells are formed in the same axial end of the honeycomb structure 100 so that a cell 105b adjacent to one plugged cell 105a is opened. That is, when seen from the axial end side of the honeycomb structure 100, the plugged cells 105a are arranged in a staggered shape (see Fig. 5(A)).

In a case where the honeycomb structure 100 has such a configuration, the honeycomb structure 100 serves as a particulate filter as below and hence the exhaust gas is purified.
First, an exhaust gas G which needs to be purified is supplied to the particulate filter from one end (the left end of Fig. 5(B)) in the axial direction. In this case, the exhaust gas G flows into the particulate filter from the cell 105b (the inflow side cell 105b) which is not plugged. Since the other end of the inflow side cell 105b is plugged, the exhaust gas G passes through the inside of the partition wall 101, and flows into the adjacent cell 105a (the discharge side cell 105a). Since the other end (the right end of Fig. 5(B)) in the axial direction of the particulate filter is opened in the discharge side cell 105a, the exhaust gas G flows outward from the other end of the discharge side cell 105a. That is, in the particulate filter, the partition wall 101 defining the adjacent cells serves as a filter, and soot or the like contained in the exhaust gas G can be collected by the partition wall 101, and thus, the exhaust gas G can be purified. Then, the collected soot is removed by sintering the honeycomb structure 100.

In the above-described particulate filter, the partition wall 101 is porous. For this reason, soot can be collected by the partition wall 101, it is desirable that the porosity of the partition wall 101 is high and the pore of the partition wall 101 is small in order to improve the soot collecting efficiency.
On the other hand, in a case where the pore of the partition wall 101 of the particulate filter is small (the pore is minute), the pressure loss generated when the exhaust gas G passes through the partition wall 101 increases. That is, the pressure loss as the particulate filter increases. In this case, since degradation in performance of the internal-combustion engine is caused, it is desirable that the pressure loss of the particulate filter is decreased. In order to decrease the pressure loss of the particulate filter, it is desirable that the pore of the partition wall 101 of the particulate filter is large, but the soot collecting efficiency degrades.
That is, pores need to be formed in the partition wall 101 so as to obtain conflicting demands that the partition wall 101 of the particulate filter improves the soot collecting efficiency and reduces the pressure loss.

Patent Literatures 2 and 3 propose a technique for forming a pore satisfying the above-described conflicting demands.

Patent Literature 2 proposes a honeycomb structure mainly containing cordierite having a chemical composition with $SiO_2$ of 45 to 55 weight%, $Al_2O_3$ of 33 to 42 weight%, and MgO of 12 to 18 weight%, wherein a thermal expansion coefficient between 25 to 800°C is $0.3 \times 10^{-6}$/°C or less, a porosity is 55 to 80%, an average minute hole diameter is 25 to 40 $\mu$m, a pore of the partition wall surface is composed of a small hole of 5 to 40 $\mu$m and a large hole of 40 to 100 $\mu$m, and the number of the small holes is 5 to 40 times the number of the large holes.
Patent Literature 2 describes that an aluminum hydroxide particle is used in which a small particle having a particle size of 0.5 to 3 μm and a large particle having a particle size of 5 to 15 μm exist more than a particle having other particle size, and that the small particle mainly forms a hole of 0.3 to 0.7 μm and the large particle mainly forms a hole of 3 to 7 μm. Then, Patent Literature 2 describes that a high collecting rate of soot or the like can be maintained even at a high porosity and a large average minute hole diameter by regulating a ratio between the small hole and the large hole of the specific sizes in the minute hole of the partition wall surface to the specific range in a manner such that the weight combination ratio of the large particle with respect to the small particle is appropriately selected in the range of 5/95 to 95/5.

Further, Patent Literature 3 proposes a silicon carbide porous body used as a base of a diesel particulate filter, having an ant-nest-like pore structure, wherein large size pores having a pore diameter of 40 to 50 μm are connected to each other by a small size pore having a pore diameter of 5 to 20 μm.

Patent Literature 3 describes that a silicon carbide porous body is manufactured by molding and sintering a raw kneaded material having silicon carbide as aggregate, silicon nitride as a silicon source, and a carbonaceous solid as a carbon source. Patent Literature 3 describes that silicon carbide is produced by the reaction between silicon nitride as a silicon source and a carbonaceous solid as a carbon source in a sintering step and a reaction-sintering is occurred so as to surround silicon carbide as aggregate.

Further, Patent Literature 3 describes that the ant-net-like pore structure is formed by connecting the large size pores formed in a combustion track of the carbonaceous solid distributed in a matrix through a small pore in a matrix.

Then, Patent Literature 3 describes that a collecting efficiency for soot or the like is extremely high and an increase in the pressure loss is suppressed by complexly connecting the small size pore and the large size pore to each other to form the ant-net-like pore structure.

In this way, in the technique of Patent Literature 2, the ratio between the small hole and the large hole having the specific sizes in the pores of the partition wall surface are controlled, but the fine particle collecting function and the pressure loss are influenced by not only the state of the partition wall surface but also the internal state of the partition wall. However, in the technique of Patent Literature 2, the state of the pore inside the partition wall is not controlled, and hence it is difficult to obtain a honeycomb structure having a desired fine particle collecting function and a desired pressure loss.

On the other hand, Patent Literature 3 describes that the ant-net-like pore structure is formed inside the partition wall by connecting the large size pores to each other through the small size pore in a matrix. However, when the pore size of the small size pore increases, the fine particle collecting function is not sufficiently exhibited, in contract, when the pore size of the small size pore decreases, the pressure loss increases. Then, in the technique of Patent Literature 3, since the small size pore connecting the large size pores to each other is a pore naturally formed in a matrix, it is difficult to control the pore size of the small size pore. Accordingly, even in the technique of Patent Literature 3, it is difficult to control the state of the small size pore inside the partition wall, for this reason, it is difficult to obtain a carbide porous body having a desired fine particle collecting function and a desired pressure loss.

That is, in any of the techniques of Patent Literatures 2 and 3, it is difficult to control the state of the pore in the partition wall, and hence it is difficult to obtain a honeycomb structure or a carbide porous body capable of improving the collecting efficiency of an object to be collected such as fine particles and reducing the pressure loss.


**Citation List**

**Patent Literature**

[Patent Literature 1] Japanese Unexamined Patent Application Publication No. 2005-270755

[Patent Literature 2] Japanese Unexamined Patent Application Publication HEI No. 9-77573

[Patent Literature 3] Japanese Unexamined Patent Application Publication No. 2009-292709

**Summary of Invention**

**Technical Problem**

The invention is made in view of the above-described circumstances, and it is an object of the invention to provide a method of manufacturing a honeycomb structure capable of improving collecting efficiency of object to be collected and capable of reducing pressure loss by controlling a state of a pore inside a partition wall, and provide a honeycomb structure and a particulate filter.

**Solution to Problem**

According to a first invention, there is provided a method of manufacturing a honeycomb structure, comprising: a step of forming a molded article by molding a raw material containing a ceramic powder and a pore-forming agent; and a step of manufacturing a honeycomb structure by sintering the molded article, wherein the pore-forming agent is powder formed of a material that disappears at a sintering temperature or less where the molded article is sintered, the powder is obtained by mixing a small particle size powder and a large particle size powder, a median particle size of which a ratio of a cumulative mass with respect to a total mass of the small particle size powder is 50% is 5 to 20 $\mu$m, a median particle size of which a ratio of a cumulative mass with respect to a total mass of the large particle size powder is 50% is 30 $\mu$m or more, and a ninety-percentage particle size of which a ratio of a cumulative mass with respect to a total mass of the large particle size powder is 90% is 80 $\mu$m or less.

According to a second invention, in the method of manufacturing a honeycomb structure, a total mass of powder having a particle size of 25 $\mu$m or less is 30 to 80% with respect to a total mass of the pore-forming agent.

According to a third invention, in the method of manufacturing a honeycomb structure, a content of the pore-forming agent in the raw material is 1 to 40 parts by mass with respect to the ceramic powder of 100 parts by mass.

According to a fourth invention, in the method of manufacturing a honeycomb structure, a value obtained by dividing the median particle size of the large particle size powder by the median particle size of the small particle size powder is 2.0 or more.

According to a fifth invention, in the method of manufacturing a honeycomb structure, a value obtained by dividing a difference between a ten-percentage particle size of which the ratio of the cumulative mass with respect to the total mass of the small particle size powder is 10% and the median particle size of the small particle size powder by the median particle size of the small particle size powder is smaller than 0.7, and a value obtained by dividing a difference between a ten-percentage particle size of which the ratio of the cumulative mass with respect to the total mass of the large particle size powder is 10% and the median particle size of the large particle size powder by the median particle size of the large particle size powder is smaller than 0.7.

According to a sixth invention, in the method of manufacturing a honeycomb structure, a ten-percentage particle size of which the ratio of the cumulative mass with respect to the total mass of the large particle size powder is 10% is larger than the median particle size of the small particle size powder.

According to a seventh invention, in the method of manufacturing a honeycomb structure, a median particle size of which a ratio of a cumulative mass with respect to a total mass of the ceramic powder is 50% is smaller than the median particle size of the large particle size powder.

(Honeycomb structure)

Further, the invention also provides a honeycomb structure obtainable by the above-described manufacturing method.

According to an eighth invention, there is provided a honeycomb structure comprising a plurality of partition walls, wherein when a volume of a pore existing in the partition walls is calculated based on a result of X-ray CT analysis of the partition walls, a ratio of a total volume of a pore having a pore size of 5 to 25 $\mu$m with respect to a total volume of entire pores is 10% or more, and a ratio of a total volume of a pore having a pore size of 50 to 100 $\mu$m with respect to a total volume of entire pores is 15 to 30%.

According to a ninth invention, in the honeycomb structure, a ratio of a total volume of a pore having a pore size of 100 $\mu$m or more with respect to a total volume of entire pores is 1% or less.

According to a tenth invention, in the honeycomb structure, a porosity of the partition walls is 30 to 70 vol%, and an average pore size of the partition walls is 5 to 25 $\mu$m.

According to an eleventh invention, the honeycomb structure contains aluminum titanate

According to a twelfth invention, in the honeycomb structure, a content of aluminum magnesium titanate is 85 to 99 mass%, a content of aluminosilicate is 1 to 5 mass%, a content of aluminum oxide is 5 mass% or less, and a content of titanium dioxide is 5 mass% or less.

(Particulate filter)

According to a thirteenth invention, there is provided a particulate filter comprising the above-described honeycomb structure, and an average thickness of the partition walls is 0.1 to 0.5 mm.

**Advantageous Effects of Invention**

In the first invention, the pore-forming agent disappears when sintering the molded article, and hence a pore is formed at a position where the pore-forming agent disappears. In the first invention, since the pore-forming agent is obtained by mixing the small particle size powder and the large particle size powder, a pore group in which the large size pores are connected to each other through the small size pore can be formed in the partition wall of the honeycomb structure. Further, since the median particle size of the small particle size powder is 5 to 20 $\mu$m, the small size pore can be maintained at a certain size, accordingly, it is possible to prevent an increase in the pressure loss while highly maintaining the collecting efficiency of an object to be collected such as fine particles. Further, since the median particle size of the large particle size powder is 30 $\mu$m or more and the ninety-percentage particle size of the large particle size powder is 80 $\mu$m or less, it is possible to prevent the leakage of the object to be collected while suppressing the pressure loss to be low. As a result, according to the first invention, it is possible to improve the collecting efficiency of the object to be collected, and to reduce the pressure loss.

According to the second invention, since it is possible to appropriately adjust the ratio of the small size pore connecting the large size pores to each other, it is possible to further prevent the leakage of the object to be collected while further suppressing the pressure loss to be low.

According to the third invention, since it is possible to adjust the porosity in the partition wall to be an appropriate value, it is possible to appropriately adjust the ratio of the small size pore connecting the large size pores to each other. Accordingly, it is possible to further prevent the leakage of the object to be collected while further suppressing the pressure loss to be low.

According to the fourth invention, since a difference between the pore size of the large size pore and the pore size of the small size pore can be maintained to be large to some extent, it is possible to further highly maintain the collecting efficiency of the object to be collected in the large size pore.

According to the fifth invention, since a difference between the pore size of the large size pore and the pore size of the small size pore can be maintained to be large to some extent, it is possible to further highly maintain the collecting efficiency of the object to be collected in the large size pore. In addition, the pore size of the large size pore and the pore size of the small size pore formed in the partition wall can be respectively made uniform to some extent. Accordingly, it is possible to uniformly form the pores throughout the entire surface of the partition wall.

According to the sixth invention, since the amount of the small size powder contained in the large particle size powder is small, it is possible to maintain the ratio of the large size pore and the ratio of the small size pore in a certain range. Accordingly, since it is possible to prevent the narrow flow channel composed of the small size pore from being excessively formed, it is possible to further suppress an increase in the pressure loss of the honeycomb structure and suppress the local deposition of the object to be collected.

According to the seventh invention, since the average particle size of the ceramic powder is smaller than the median particle size of the small particle size powder, it is possible to prevent the pore-forming agent from existing at a biased position. In this case, since the uniform pore group can be easily formed in the partition wall, it is possible to allow the collecting efficiency of the object to be collected in the honeycomb structure and the pressure loss to be uniform.

(Honeycomb structure)

According to the eighth invention, since the pore group having an appropriate structure is formed in the partition wall of the honeycomb structure, it is possible to maintain the pressure loss to be low while highly maintaining the collecting efficiency of the object to be collected.

According to the ninth invention, since the pore having an extremely large pore size is few, it is possible to further suppress the leakage of the object to be collected.

According to the tenth invention, since the porosity of the partition wall is 30 to 70 vol% and the average pore size of the partition wall is 5 to 25 $\mu$m, it is possible to efficiently collect an object to be collected such as particles of 50 to 100 nm contained in an exhaust gas discharged from an internal-combustion engine.

According to the eleventh invention, since the honeycomb structure contains aluminum titanate, there are advantages that the thermal shock resistance of the honeycomb structure is excellent and the honeycomb structure is not easily damaged due to the heat generated when the collected fine particles and the like are sintered.

According to the twelfth invention, since the material has an appropriate composition, the heat resistance and the mechanical strength can be improved.

(Particulate filter)

According to the thirteenth invention, since the average thickness of the partition wall is 0.1 to 0.5 mm, it is possible to further highly obtain both a high soot collecting efficiency and a low pressure loss. Further, the absorption of heat generated when combusting fine particles (particulates) such as collected soot and the generation of heat at a room temperature rarely occurs. Accordingly, it is appropriately used as the particulate filter to collect fine particles in an exhaust gas discharged from an internal-combustion engine such as a diesel engine.

**Brief Description of Drawings**

Fig. 1(A) is a schematic explanatory diagram illustrating an internal structure of a partition wall of a honeycomb structure of the invention, and Figs. 1(B) and 1(C) are schematic explanatory diagrams to explain an X-ray CT analysis.

Fig. 2 is a diagram schematically illustrating an example of a particle size distribution profile of large particle size powder and small particle size powder in a pore-forming agent.

Fig. 3(A) is a schematic explanatory diagram illustrating a hollow piece, Fig. 3(B) is a schematic explanatory diagram illustrating pressure loss measurement, and Fig. 3(C) is a schematic explanatory diagram illustrating a soot leakage test.

Fig. 4(A) is a graph illustrating a distribution of a pore volume with respect to a pore size obtained by X-ray CT measurement, and Fig. 4(B) is a pore volume distribution table.

Fig. 5 is a schematic explanatory diagram illustrating a honeycomb structure, where (A) is a front view and (B) is a cross-sectional view.

**Description of Embodiments**

[Honeycomb structure]

Next, an embodiment of the invention will be described based on the drawings.

It is characterized in that a honeycomb structure of the invention can be used in a filter which collects and removes fine particles from a gas containing fine particles and a pore state of a partition wall of the honeycomb structure is adjusted so as to efficiently collect the fine particles contained in the gas.

In a case where the honeycomb structure of the invention is particularly used in a particulate filter which purifies an exhaust gas discharged from an internal-combustion engine such as a diesel engine or a gasoline engine, fine particles (for example, particles of about 0.1 to 0.3 $\mu$m) such as soot in an exhaust gas can be efficiently collected.

Then, in a case where the honeycomb structure of the invention is used as a particulate filter, it is desirable that the average thickness (the cell wall thickness) of the partition wall is 0.1 to 0.5 mm. In such a thickness of the partition wall, there are advantages that it is possible to further highly obtain both a high soot collecting efficiency and a low pressure loss and the adsorption of heat generated when combusting collected soot (particulates) and the generation of heat at a room temperature rarely occurs. The "average thickness" of the partition wall indicates an average value of the thickness of the partition wall between the respective through-holes in a case where a pair of adjacent through-holes is arbitrarily selected at ten positions.

The honeycomb structure of the invention can be used to remove an object to be collected from a fluid (for example, a gas or a liquid) containing the object to be collected other than a filter that purifies an exhaust gas discharged from an internal-combustion engine. For example, the honeycomb structure of the invention can be also used in a post-processing device for an exhaust gas that is discharged from an incinerator, an oil refining facility, an external-combustion engine and the like.

(Structure of honeycomb structure)

Next, the structure of the honeycomb structure of the invention will be described.

A honeycomb structure 100 of the invention is a cylindrical member, and comprises a plurality of through-holes 105 which are divided by a plurality of partition walls 101 and penetrates the honeycomb structure 100 in the axial direction (see Fig. 5). One ends of cells (through-holes) 105a which are a part of the plurality of through-holes 105 and the other ends of the remaining cells (through-holes) 105b which are the plurality of through-holes 105 are plugged by a plugging material 106.

In the honeycomb structure 100, the plurality of partition walls 101 which divide the plurality of through-holes 105 have a structure in which a gas can permeate the partition walls 101. Specifically, a plurality of pores is formed inside the partition walls 101, and the plurality of pores communicate with each other so as to form a plurality of flow paths through which a gas passes.

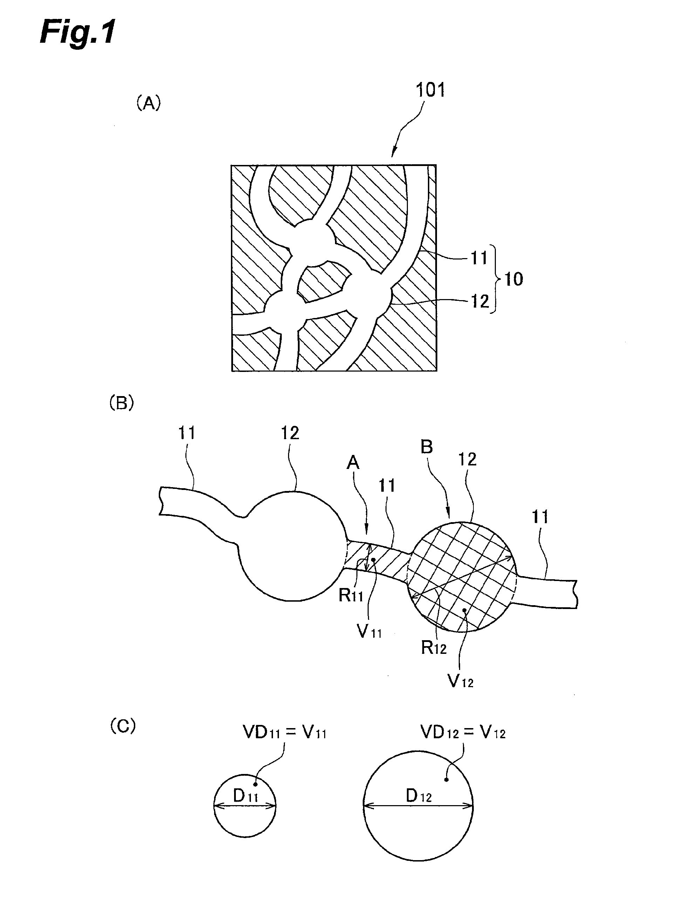

Then, as shown in Fig. 1(A), the plurality of flow paths 10 which are formed inside the partition walls 101 have the above-described structure in which an object to be collected such as a fine particle which is contained in a gas is efficiently collected when the gas passes through the flow path 10.

The structure which can efficiently collect such an object to be collected is a structure in which a volume ratio (a ratio of a total volume) of a pore (a small size pore) having a pore size of 5 to 25 $\mu$m with respect to a total volume of entire pores becomes 10% or more and a volume ratio (a ratio of a total volume) of a pore (a large size pore) having a pore size of 50 to 100 μm with respect to the total volume of the entire pores becomes 15 to 30% when the volume of the pores existing in the partition walls 101 is calculated based on the result obtained by performing X-ray CT analysis on the partition walls 101. In the specification, the "total volume of the entire pores" indicates the total volume of the entire pores which can be detected by the X-ray CT analysis.

In a case where the partition wall 101 has the above-described structure, as shown in Fig. 1(A), a pore existence state is obtained in which large size pores 12 inside the partition wall 101 are connected to each other by a pore (a small size pore or an intermediate size pore) having a pore size smaller than that of the large size pore 12. Further, in a case where the partition wall 101 has the above-described structure, it is considered that pores are positioned in the flow path 10 connecting both surfaces of the partition walls 101 to each other so that small size pores having a diameter of 25 μm or less are formed inside the partition wall 101.

In a case where a fluid containing an object to be collected (for example, a gas containing fine particles) flows to the above-described partition wall 101, it is considered that the object to be collected easily collides with the wall surface and the object to be collected is attached and collected in the wall surface since a pore size is narrowed in a small size pore (path) 11 between the large size pores 12 of the flow path 10.

On the other hand, when a fluid flows from the small size pore 11 into the large size pore 12, it is considered that the object to be collected is easily attached to the inner wall of the large size pore 12 since the speed of the fluid decreases with an increase in the pore size.

Further, since the large size pore 12 exists in the flow path 10, the path in which fluid flows is maintained even after the object to be collected is collected compared to a case where the entire flow path 10 is formed only by the small size pore 11, and hence pressure loss can be made small.

That is, in the honeycomb structure of the invention, since the state of the pores in the partition wall 101 is as described above, the collecting efficiency of an object to be collected can be extremely increased and an increase in the pressure loss can be suppressed.

Further, an increase in the pressure loss can be suppressed due to the existence of the large size pores 12 in the flow path 10, but when there are many large size pores 12 having a very large pore size, there is a tendency that the leakage of the object to be collected easily occur in the flow path 10.

However, since the existence amount of the large size pore 12 having a very large pore size is small when the volume ratio (the ratio of the total volume) of the pore having a pore size of 100 μm or more with respect to the total volume of the entire pores existing in the partition wall 101 is 1% or less in a case where the volume of the pore is calculated based on the result of the X-ray CT analysis, an advantage can be obtained in which the leakage of the object to be collected rarely occurs.

Then, in a case where the porosity (open porosity) and the pore size (fine pore size) of the partition wall 101 are calculated based on the measurement result according to a known mercury intrusion technique, the collecting efficiency of an object to be collected can be further improved when the porosity is 30 to 70 vol% and the average pore size (average fine pore diameter) is 5 to 25 μm. In this case, the internal structure of the partition wall 101 becomes a structure which is further desirable for collecting an object to be collected such as soot, having an average particle size of 10 nm to 1 μm, discharged from an internal-combustion engine such as an engine.

(Calculation of pore size and pore volume of X-ray CT analysis)

By performing the X-ray CT analysis of the partition wall 101, the distribution of the pores in the partition wall 101, that is, the shape of the flow path 10 in the partition wall 101 can be obtained as three-dimensional data. Then, the pore volume and the pore size described above can be calculated based on the three-dimensional data.

Specifically, as shown in Fig. 1(B), the shape of the flow path 10 in which the large size pore 12 and the small size pore 11 are connected to each other can be obtained as three-dimensional data by performing the X-ray CT analysis. Then, a pore size ($R_{11}$) of the small size pore 11 and a pore size ($R_{12}$) of the large size pore 12 in the three-dimensional data are defined as below.

The small size pore 11 (the hatching portion A) positioned between the adjacent large size pores 12 in the flow path 10 is recognized as an image, and a volume $V_{11}$ of the small size pore 11 is calculated. Then, a sphere with a true spherical shape having a volume $VD_{11}$ equal to the volume $V_{11}$ is obtained, and a diameter $D_{11}$ of the obtained sphere is defined as the pore size $R_{11}$ of the small size pore 11 (Fig. 1(C)). Similarly, the large size pore 12 (the hatching portion B) positioned between the adjacent small size pores 11 in the flow path 10 is recognized as an image, and a volume $V_{12}$ of the large size pore 12 is calculated. A sphere of a true sphere shape having a volume $VD_{12}$ equal to the volume $V_{12}$ is obtained, and the diameter $D_{12}$ of the obtained sphere is defined as the pore size $R_{12}$ of the large size pore 12.

(Material of honeycomb structure)

Further, the honeycomb structure of the invention can be formed of various materials, but particularly, it is desirably formed of a material containing aluminum titanate.

First, in a case where the honeycomb structure is used as a filter which collects fine particles such as soot, it is considered that, when fine particles are once deposited on the partition wall 101 or inside the partition wall 101 (that is, inside the flow path 10), new fine particles are preferentially deposited so as to laminate at the same position of the deposited fine particles. In this case, when the honeycomb structure is regeneratively combusted, the amount of heat is large in a portion where a large amount of fine particles are deposited and thermal stress concentrates, whereby there is a possibility that thermal failure or melting of the partition wall 101 may occur. For this reason, when the honeycomb structure is used for a certain period, regenerative combustion is conducted before a large amount of fine particles is deposited.

Here, in a case where the honeycomb structure is formed of a material containing aluminum titanate, the thermal shock resistance and the mechanical strength of the honeycomb structure can be increased. For this reason, even in a case where the honeycomb structure is regeneratively combusted while a large amount of fine particles are deposited inside the honeycomb structure, it is possible to suppress the honeycomb structure from being damaged by a thermal shock or the like caused by the heat generated at that time.

Accordingly, there is no need to regeneratively combust the honeycomb structure every time a small amount of fine particles are deposited. That is, since there is no need to regeneratively combust the honeycomb structure frequently, the honeycomb structure can be continuously used until a large amount of fine particles are deposited.

In this case, the honeycomb structure can be continuously used as a filter for a long period of time until the pressure loss of the honeycomb structure becomes a predetermined value or more, and then the honeycomb structure can be used again by the regenerative combustion. Accordingly, the maintenance workability can be improved and the collecting efficiency of fine particles can be further improved.

It is desirable that the honeycomb structure of the invention is formed of porous ceramics mainly composed of an aluminum titanate crystal. "Mainly composed of an aluminum titanate crystal" indicates that a main crystal phase constituting an aluminum titanate ceramic sintered body is an aluminum titanate crystal phase. The aluminum titanate crystal phase may be, for example, an aluminum titanate crystal phase, an aluminum magnesium titanate crystal phase, or the like.

The honeycomb structure of the invention may contain a phase (crystal phase) other than the aluminum titanate crystal phase. Examples of the phase (the crystal phase) other than such an aluminum titanate crystal phase include a phase such as a raw material derived phase which is used in the production of the aluminum titanate ceramic sintered body. The raw material derived phase is more specifically a phase which is derived from aluminum source powder, titanium source powder and/or magnesium source powder remaining without forming an aluminum titanate crystal phase in a case where the honeycomb structure of the invention is produced according to the production method described below. Further, the honeycomb structure of the invention may contain a crystal pattern of alumina, titania or the like, in addition to the crystal pattern of aluminum titanate or aluminum magnesium titanate in the X-ray diffraction spectrum.

In a case where a raw material mixture for forming the honeycomb structure contains silicon source powder, the honeycomb structure of the invention (for example aluminum titanate ceramic sintered body) may contain a silicon source powder derived glass phase. The glass phase indicates a non-crystalline phase of which a main component is $SiO_2$. In this case, it is desirable that the content of the glass phase is 5 mass% or less and 2 mass% or more. When the glass phase of 5 mass% or less is contained, it is easy to obtain an aluminum titanate ceramic sintered body which satisfies pore characteristics demanded in a ceramic filter such as a particulate filter.

It is desirable that the honeycomb structure contains aluminum titanate as described above, and the composition of the honeycomb structure of the invention can be expressed by, for example, the composition: $Al_{2(1-x)}Mg_xTi_{(1+x)}O_5$. The value of x is desirably 0.03 or more, more desirably equal to or more than 0.03 and equal to or less than 0.15, and further desirably equal to or more than 0.03 and equal to or less than 0.12. Furthermore, the composition of the honeycomb structure is not limited to the above-described composition. Further, the honeycomb structure may contain a minor component which is inevitably contained in a raw material derived or manufacturing process.

Further, since it is possible to further improve the durability of the honeycomb structure with respect to thermal stress, the honeycomb structure is desirable to have the following composition.

Aluminum magnesium titanate: 85 to 99 mass%
Aluminosilicate: 1 to 5 mass%
Aluminum oxide: 5 mass% or less (0 to 5 mass%)
Titanium dioxide: 5 mass% or less (0 to 5 mass%)

Furthermore, the composition of the honeycomb structure is not limited to the above-described composition.

[Honeycomb structure manufacturing method]

Next, a method of manufacturing the honeycomb structure of the invention will be described.
The honeycomb structure of the invention is produced in a manner such that a molded article is formed by molding a raw material containing ceramic powder and a pore-forming agent and the molded article is sintered. In the method of manufacturing the honeycomb structure of the invention, the above-described honeycomb structure can be produced by adjusting the pore-forming agent contained in the raw material to a predetermined state.

(Schematic description of manufacturing method)

The method of manufacturing the honeycomb structure of the invention comprises, for example, a molding step, a degreasing step and a sintering step in this order.
In the molding step, first, a raw material mixture is prepared by mixing a ceramic powder and a pore-forming agent and then kneading, and the raw material mixture is molded into a molded object having a predetermined shape, that is, a molded object having a honeycomb structure. Various addition agents are mixed in the raw material mixture other than the ceramic powder and the pore-forming agent. The raw material mixture includes, for example, binder, plasticizer, disperser, solvent and the like as the addition agent.
Next, in the degreasing step, the molded object is degreased so as to remove a pore-forming agent, an organic component and the like.
Then, in the sintering step, the degreased molded object is sintered by a known baking furnace, thereby manufacturing the honeycomb structure comprising porous partition walls of the invention.
Then, in the method of manufacturing the honeycomb structure of the invention, as the pore-forming agent, an agent used is formed of a material which disappears at a sintering temperature or less at which a molded article is sintered. In this case, when the molded article containing the pore-forming agent is heated in the degreasing step or the sintering step, the pore-forming agent disappears by the combustion or the like. Accordingly, a space is formed in a position where the pore-forming agent existed and the ceramic powder positioned between the spaces is contracted during the sintering, thereby allowing the structure of the partition wall 101 of the honeycomb structure to be a structure having the flow path 10 through which a fluid such as a gas can flow.
The content (the mixing ratio) of the pore-forming agent with respect to the ceramic powder in the raw material mixture is desirably adjusted to be 1 to 40 parts by mass and more desirably adjusted to be 5 to 25 parts by mass with respect to the ceramic powder of 100 parts by mass. In such a content, since the porosity in the partition wall 101 can be easily adjusted to an appropriate value, the ratio of the small size pore 11 can be easily adjusted to an appropriate value.

(Detailed description of raw material)

<Pore-forming agent>

The pore-forming agent (the pore-forming agent) which is important for manufacturing the honeycomb structure of the invention will be described in detail.
In the method of manufacturing the honeycomb structure of the invention, the powder (mixed powder) obtained by mixing the small particle size powder and the large particle size powder is used as the pore-forming agent in order to form the flow path 10 having the above-described structure in the partition wall 101 of the honeycomb structure.

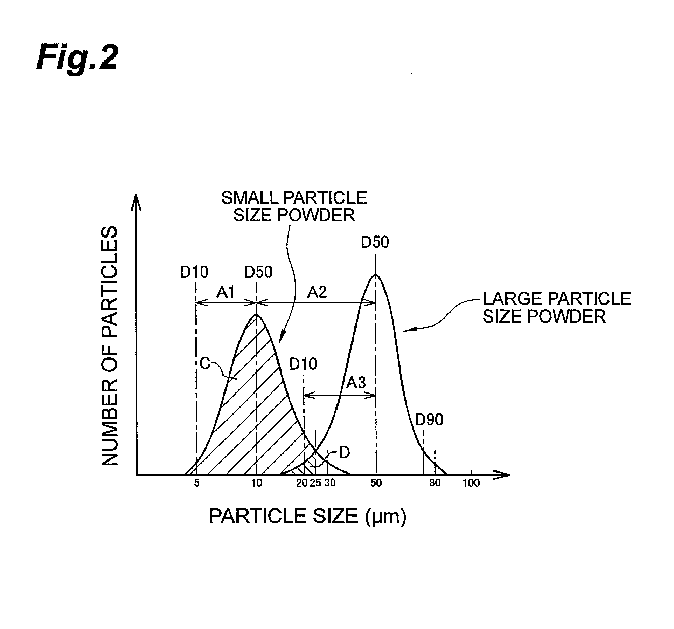

Fig. 2 is a diagram schematically illustrating an example of a particle size distribution profile of a large particle size powder and a small particle size powder in the pore-forming agent.
The particle size distribution of the powder which is mixed in the mixed powder is adjusted so that the large particle size powder and the small particle size powder have the following particle size distribution. The particle size of the powder constituting the small particle size powder is desirably 1 to 50 $\mu$m and more desirably 5 to 30 $\mu$m as shown in Fig. 2. The median particle size D50 of the small particle size powder is 5 to 20 $\mu$m.
The median particle size D50 of the small particle size powder indicates the particle size in which the ratio of the cumulative mass obtained by accumulating the mass of the powder from powder having a small particle size with respect to the total mass of the entire small particle size power mixed in the mixed powder becomes 50%.
The particle size of the small particle size powder is a value obtained according to laser diffraction method.
On the other hand, the particle size of the powder constituting the large particle size powder is desirably 10 to 100 $\mu$m and more desirably 20 to 100 $\mu$m as shown in Fig. 2. The median particle size D50 of the large particle size powder is 30 $\mu$m or more, and the particle size D90 of the large particle size powder in which the cumulative mass becomes 90% is 80 $\mu$m or less. The upper limit value of the median particle size D50 of the large particle size powder is, for example, 45 $\mu$m. The lower limit value of the particle size D90 of the large particle size powder is, for example, 60 $\mu$m. The median particle size D50 of the large particle size powder indicates the particle size in which the ratio of the cumulative mass obtained by accumulating the mass of the powder from powder having a small particle size with respect to the total mass of the entire large particle size powder mixed in the mixed powder becomes 50%.

Further, the particle size D90 of the large particle size powder in which the cumulative mass becomes 90% indicates the particle size in which the ratio of the cumulative mass obtained by accumulating the mass of the powder from powder having a small particle size with respect to the total mass of the entire large particle size powder mixed in the mixed powder becomes 90%.

The particle size of the large particle size powder is a value obtained according to laser diffraction method as in the small particle size powder.

When the mixed powder containing the small particle size powder and the large particle size powder having such a particle size distribution is used as the pore-forming agent, the large size pore 12 can be formed in a position where the large particle size powder has disappeared, and the small size pore 11 can be formed in a position where the small particle size powder has disappeared. Further, since the small particle size powder is disposed between the large particle size powders, a pore group (that is, the flow path 10) in which the large size pores 12 are connected to each other by the small size pore 11 can be formed in the partition wall 101 of the honeycomb structure.

Further, since the median particle size D50 of the large particle size powder is 30 $\mu$m or more, a pore having a certain size or more (for example, 50 $\mu$m or more) can be formed as the large size pore 12 formed by the disappearance of the large particle size powder. In addition, since the particle size D90 of the large particle size powder is 80 $\mu$m or less, it is possible to reduce the existence amount of the large size pore 12 being extremely large such that the pore size is 100 $\mu$m or more. For this reason, since the large size pore 12 exists in the flow path 10, the object to be collected is prevented from permeating the partition wall 101 even when the large size pore 12 exists while suppressing the pressure loss to be low.

On the other hand, since the median particle size of the small particle size powder is 5 to 20 $\mu$m, the small size pore 11 which is formed by the disappearance of the small particle size powder can be maintained in a certain size. That is, the diameter of the small size pore 11 between the large size pores 12 in the flow path 10 can be maintained in a certain size (for example, about 5 to 25 $\mu$m). In this case, since the small size pore 11 between the large size pores 12 is not so narrow, an increase in the pressure loss can be prevented, furthermore, since the small size pore 11 between the large size pores 12 is not so wide, the function of collecting the object to be collected can be highly maintained.

(With regard to particle size distribution of mixed powder)

It is desirable to adjust the entire mixed powder so that the total mass of the powder having a particle size of 25 $\mu$m or less (the sum of the hatching portion C and the hatching portion D in Fig. 2) with respect to the total mass of the entire mixed powder (the total mass of the pore-forming agent) is 30 to 80%. When the total mass of the powder having a particle size of 25 $\mu$m or less is less than 30%, the diameter of the flow path 10 increases, whereby there is a tendency that a possibility of causing the leakage of the object to be collected increases while the pressure loss can be reduced. On the other hand, when the total mass of the powder having a particle size of 25 $\mu$m or less exceeds 80%, the diameter of the flow path 10 decreases and the existence amount of the large size pore 12 decreases, whereby there is a tendency that the pressure loss increases.

Accordingly, it is desirable that the total mass of the powder having a particle size of 25 $\mu$m or less is 30 to 80% of the total mass of the entire mixed powder, in such a range, the flow path 10 connecting the large size pores 12 can become a flow channel having an appropriate diameter, and hence the leakage of the object to be collected can be further prevented while further decreasing the pressure loss.

(With regard to particle size distribution of small particle size powder and large particle size powder)

It is desirable that the value obtained by dividing the median particle size D50 of the large particle size powder by the median particle size D50 of the small particle size powder (D50 of the large particle size powder/D50 of the small particle size powder) is 2.0 or more. When the value is less than 2.0, the median particle size D50 of the small particle size powder and the median particle size D50 of the large particle size powder are close to each other. In this case, in the flow path 10, a difference between the pore size of the large size pore 12 and the pore size of the small size pore 11 between the large size pores 12 decreases, and hence the flow speed when a fluid such as a gas flows from the small size pore 11 into the large size pore 12 tends to become difficult two sufficiently decrease. In this case, since the flow speed may not sufficiently decrease, there is a tendency that the function of collecting the object to be collected in the large size pore 12 is degraded.

Accordingly, it is desirable that the value obtained by dividing the median particle size D50 of the large particle size powder by the median particle size D50 of the small particle size powder is 2.0 or more, in such a range, it is easy to highly maintain the efficiency of collecting the object to be collected in the large size pore 12. The upper limit value of the value obtained by dividing the median particle size D50 of the large particle size powder by the median particle size D50 of the small particle size powder is, for example, 9.0 (45 $\mu$m/5 $\mu$m).

In addition, it is desirable that the respective powders (the small particle size powder and the large particle size powder) are adjusted so that the median particle sizes D50 thereof are away from each other to some extent and the particle size distribution of the respective powders is narrowed.

In this case, since a difference (A2 of Fig. 2) between the median particle size D50 of the large size pore 12 and the median particle size D50 of the small size pore 11 between the large size pores 12 can be maintained to a certain large size, it is easy to highly maintain the efficiency of collecting the object to be collected in the large size pore 12.

In addition, the pore sizes of the large size pores 12 formed in the partition wall 101 can be made uniform to some extent, and similarly, the pore size of the small size pore 11 (that is, the diameter of the path between the large size pores 12) can be made uniform to some extent. In this case, the plurality of flow paths 10 are formed in the partition wall 101, but the state of the flow paths 10 can be made uniform to some extent. That is, since ease of flow of a fluid such as a gas can be made to be almost the same state even in any flow path 10, it is possible to prevent the fluid from selectively flowing to the specific flow path 10 and prevent a large amount of the object to be collected from being deposited on the flow path 10. In other words, it is possible to evenly deposit the object to be collected inside the plurality of flow paths 10 formed in the partition wall 101.

Accordingly, since it is possible to prevent a problem in which a large amount of the object to be collected is deposited and the flow path 10 of which the inner space is narrowed compared to other flow path 10 is locally formed, an increase (degradation) in the pressure loss of the honeycomb structure can be easily prevented.

Although the profile of the particle size distribution of the small particle size powder and the large particle size powder is not particularly limited, it is desirable that each particle size distribution of the small particle size powder and the large particle size powder is narrowed.

For example, the small particle size powder is adjusted so that a value obtained by dividing a difference (A1 of Fig. 2) between a ten-percentage particle size (D10) of which a ratio of the cumulative mass with respect to the total mass of the small particle size powder is 10% and the median particle size D50 of the small particle size powder by the median particle size D50 of the small particle size powder ((D50 of the small particle size powder - D10 of the small particle size powder)/D50 of the small particle size powder) becomes smaller than 0.7. The lower limit value of the value is, for example, 0.3.

Further, for example, the large particle size powder is adjusted so that a value obtained by dividing a difference (A3 of Fig. 2) between the ten-percentage particle size (D10) of which a ratio of the cumulative mass with respect to the total mass of the large particle size powder is 10% and the median particle size D50 of the large particle size powder by the median particle size D50 of the large particle size powder ((D50 of the large particle size powder - D10 of the large particle size powder)/ D50 of the large particle size powder) becomes smaller than 0.7. The lower limit value of the value is, for example, 0.3.

When the mixed powder obtained by mixing the small particle size powder and the large particle size powder is used as the pore-forming agent, it is possible to prevent the flow paths 10 from being formed at a local position in a concentrating manner in the partition wall 101 as described above, and it is easy to prevent an increase (degradation) in the pressure loss of the honeycomb structure.

Then, it is desirable that the particle size D10 of the large particle size powder is larger than the median particle size D50 of the small particle size powder (see Fig. 2).

Since the small particle size powder and the large particle size powder are adjusted so as to become such a state and hence the amount of the small size powder contained in the large particle size powder is small, it is possible to prevent the small size pore 11 from being formed in large quantity. Accordingly, since it is possible to prevent the narrow small size pore 11 from being excessively formed between the large size pores 12, it is possible to further suppress an increase in the pressure loss of the honeycomb structure. Then, it is possible to further suppress degradation in the pressure loss which is caused by the large amount of deposition of the object to be collected in the narrow small size pore 11.

(Relation between pore-forming agent and ceramic powder)

Further, it is desirable that the content of the pore-forming agent in the raw material mixture is 1 to 40 parts by mass with respect to the ceramic powder of 100 parts by mass as described above. Since the content of the pore-forming agent is adjusted in such a range, the leakage of the object to be collected can be further prevented while further suppressing the pressure loss as small as possible, and the strength of the honeycomb structure can be maintained. The content of the pore-forming agent indicates the total amount of the content of the small particle size powder and the content of the large particle size powder.

In particular, it is more desirable that the content of the pore-forming agent is 5 to 25 parts by mass with respect to the ceramic powder of 100 parts by mass.

When the content of the pore-forming agent becomes smaller than 1 part by mass with respect to the ceramic powder of 100 parts by mass, the pore (that is, the flow path 10) formed in the partition wall 101 is few, and hence there is an increasing possibility that the pressure loss increases. On the other hand, when the content of the pore-forming agent becomes larger than 40 parts by mass with respect to the ceramic powder of 100 parts by mass, the ratio of the pore formed inside the partition wall 101 excessively increases, accordingly, there is an increasing possibility that the leakage of the object to be collected occurs, and there is also an increasing possibility that the strength of the partition wall 101 is weakened.

Accordingly, it is desirable that the content of the pore-forming agent is adjusted to be 1 to 40 parts by mass with respect to the ceramic powder of 100 parts by mass, and it is more desirable that the content is adjusted to be 5 to 25 parts by mass with respect to the ceramic powder of 100 parts by mass.

In particular, when the ceramic powder and the pore-forming agent are adjusted so that the median particle size D50 of the large particle size powder in the pore-forming agent becomes larger than the median particle size D50 of which a ratio of the cumulative mass with respect to the total mass of the ceramic powder is 50% (that is, the median particle size D50 of the ceramic powder becomes smaller than the median particle size D50 of the large particle size powder), the ceramic powder and the pore-forming agent can be easily and uniformly mixed with each other when mixing the ceramic powder and the pore-forming agent with each other. Accordingly, since it is possible to prevent the pore-forming agent from existing at a biased position in the partition wall 101 when forming the molded article, the uniform flow path 10 can be easily formed in the partition wall 101, and hence the collecting efficiency of the object to be collected and the pressure loss in the honeycomb structure can be made uniform. In a case where the ceramic powder contains plural types of powder, it is desirable that the median particle size D50 of the large particle size powder is larger than the median particle size D50 of any ceramic powder.

(Material of pore-forming agent)

The material of the above-described pore-forming agent used is not particularly limited as long as it disappears at the after-mentioned sintering temperature or less at which the molded article is sintered. Examples of the material of the pore-forming agent include a carbon material such as graphite; a resin such as polyethylene, polypropylene and polymethylmethacrylate; a plant material such as starch, a nut shell, a walnut shell and corn, and the like. Among the above-described plant material, examples of the starch include corn starch, barley starch, wheat starch, tapioca starch, potato starch (potato starch powder), beanstarch, rice starch, endow starch, coconut starch, canna starch, and the like.

Further, the large particle size powder and the small particle size powder in the pore-forming agent are not particularly limited as long as the particle size distribution and the property described above are ensured, and both powders may be formed of materials which are completely different from each other.

However, when both powders are materials which have a different particle size distribution and are formed of the same material, or, when both powders are materials which are different from each other but disappear at the sintering temperature or less of the molded article, it is easy to adjust the timing at which the powder disappears, and hence it is easy to form the flow path 10 having the appropriate structure.

On the other hand, even in a case when both powders are formed of materials which are completely different from each other, when temperatures at which both powders disappear are greatly different from each other, an advantage can be obtained in which abrupt heat generation associated with the buring can be suppressed.

<Ceramic powder>

The honeycomb structure of the invention may be formed of various materials, but it is desirably manufactured by a material containing aluminum titanate as described above.

Hereinafter, the raw material will be described in a case where the honeycomb structure of the invention is manufactured by a material containing aluminum titanate, that is, a case where the honeycomb structure is an aluminum titanate ceramic sintered body.

(Aluminum source powder)

The raw material mixture which is used to manufacture the honeycomb structure (hereinafter, simply referred to as a "honeycomb structure") as the aluminum titanate ceramic sintered body contains aluminum source powder. The aluminum source powder is powder of a compound to be an aluminum component constituting the honeycomb structure. Examples of the aluminum source powder include powder of alumina (aluminum oxide). Examples of the crystal form of alumina include $\gamma$-type, $\delta$-type, $\theta$-type, $\alpha$-type and the like, and an unshaped (amorphous) type may be used. Among these, $\alpha$-type alumina is desirably used.

The aluminum source powder which is used to manufacture the honeycomb structure of the invention may be powder of a compound led to alumina by being solely sintered in air. Examples of such a compound include an aluminum salt, aluminum alkoxide, aluminum hydroxide, metallic aluminum and the like.

The aluminum salt may be an inorganic salt with inorganic acid, or an organic slat with organic acid. Specific examples of the aluminum inorganic salt include an aluminum nitrate salt such as aluminum nitrate and ammonium nitrate aluminum; an aluminum carbonate salt such as ammonium carbonate aluminum; and the like. Examples of the aluminum organic salt include aluminum oxalate, aluminum acetate, aluminum stearate, aluminum lactate, aluminum laurate and the like.

Further, specific examples of aluminum alkoxide include aluminum isopropoxide, aluminum ethoxide, aluminum sec-butoxide, aluminum tert-butoxide and the like.

Examples of the crystal form of aluminum hydroxide include a gibbsite type, a bayerite type, a nordstrandite type, a boehmite type, a pseudoboehmite type and the like, and an unshaped (amorphous) type may be used. Examples of aluminum hydroxide of an amorphous type include aluminum hydrolysate obtained by hydrolyzing a solution of an aqueous aluminum compound such as an aluminum salt and aluminum alkoxide.

In the manufacturing of the honeycomb structure of the invention, as the aluminum source powder, only one type may be used, or two or more types may be used together.

Among them, as the aluminum source powder, alumina powder is desirable, and $\alpha$-type alumina powder is more desirable. The aluminum source powder may contain a minor component which is inevitably contained in the raw material derived or manufacturing process.

Here, the particle size (D50) corresponding to 50% of the cumulative percentage based on the volume, measured by the laser diffraction, of the aluminum source powder used in the method of manufacturing the honeycomb structure of the invention is desirably in the range of 20 $\mu$m to 60 $\mu$m. By adjusting D50 of the aluminum source powder to this range, an aluminum titanate ceramic sintered body having excellent porosity can be obtained, and the sintering contraction rate can be more effectively reduced. D50 of the aluminum source powder is more desirably 30 $\mu$m to 60 $\mu$m.

(Titanium source powder)

The titanium source powder which is contained in the raw material mixture used in the method of manufacturing the honeycomb structure of the invention is the powder of the compound to be a titanium component constituting the honeycomb structure, and examples of such a compound include the powder of titanium oxide. Examples of the titanium oxide include titanium oxide (IV), titanium oxide (III), titanium oxide (II) and the like, and the titanium oxide (IV) is desirably used. Examples of the crystal form of titanium oxide (IV) include an anatase type, a rutile type, a brookite type and the like, and an unshaped (amorphous) type may be used. The anatase type titanium oxide (IV) and the rutile type titanium oxide (IV) are more desirable.

The titanium source powder which is used in the method of manufacturing the honeycomb structure of the invention may be powder of a compound led to titania (titanium oxide) by being solely sintered in air. Examples of such a compound include titanium salt, titanium alkoxide, aqueous titanium oxide, titanium nitride, titanium sulfide, titanium metal and the like.

Specific examples of the titanium salt include titanium trichloride, titanium tetrachloride, titanium sulfide (IV), titanium sulfide (VI), titanium sulfate (IV) and the like. Specific examples of the titanium alkoxide include titanium (IV) ethoxide, titanium (IV) methoxide, titanium (IV) t-butoxide, titanium (IV) isobutoxide, titanium (IV) n-propoxide, titanium (IV) tetraisopropoxide, a chelated compound thereof and the like.

In the method of manufacturing the honeycomb structure of the invention, as the titanium source powder, only one type may be used, or two or more types may be used together.

Among them, as the titanium source powder, titanium oxide powder is desirable, and titanium oxide (IV) powder is more desirable. The titanium source powder may contain a minor component which is inevitably contained in a raw material derived or manufacturing process.

The particle size of the titanium source powder is not particularly limited, but as the titanium source powder, powder of which the particle size (D50) corresponding to 50% of the cumulative percentage based on the volume, measured by the laser diffraction, is in the range of 0.1 to 25 $\mu$m is generally used. Further, as the titanium source powder, it is desirable to use titanium source powder of which D50 is in the range of 1 to 20 $\mu$m in order to attain the sufficiently low sintering contraction rate. The titanium source powder may have a bimodal particle size distribution, but in a case of using the titanium source powder having such a bimodal particle size distribution, the particle size of the particle which forms the peak of the large particle size measured by the laser diffraction is desirably in the range of 20 to 50 $\mu$m.

Further, the mode diameter of the titanium source powder measured by the laser diffraction is not particularly limited, but the titanium source powder in the range of 0.1 to 60 $\mu$m may be used.

(Mole ratio between aluminum source powder and titanium source powder)

In the method of manufacturing the honeycomb structure of the invention, the mole ratio (the aluminum source powder : the titanium source powder) between the aluminum source powder in terms of $Al_2O_3$ (alumina) and the titanium source powder in terms of $TiO_2$ (titania) in the raw material mixture is desirably in the range of 35 : 65 to 45 : 55, and more desirably in the range of 40 : 60 to 45 : 55. In such a range, when the titanium source powder is excessively used with respect to the aluminum source powder, the sintering contraction rate of the molded article of the raw material mixture can be more effectively reduced.

(Magnesium source powder)

Further, the raw material mixture which is used in the method of manufacturing the honeycomb structure of the invention may further contain the magnesium source powder. In a case where the raw material mixture contains the magnesium source powder, the obtained aluminum titanate ceramic sintered body is a sintered body containing an aluminum magnesium titanate crystal. Examples of the magnesium source powder include powder of a compound led to magnesia by being solely sintered in air, in addition to the powder of magnesia (magnesium oxide). The latter examples include a magnesium salt, magnesium alkoxide, magnesium hydroxide, magnesium nitride, magnesium metal and the like.

Specific examples of the magnesium salt include magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, magnesium benzoate and the like.

Specific examples of the magnesium alkoxide include magnesium methoxide, magnesium ethoxide and the like. The magnesium source powder may contain a minor component which is inevitably contained in a raw material derived or manufacturing process.

As the magnesium source powder, powder of a compound serving as a magnesium source and an aluminum source may be used. Examples of such a compound include magnesia spinel ($MgAl_2O_4$). In a case where powder of a compound serving as a magnesium source and an aluminum source is used as the magnesium source powder, the mole ratio between the amount converted to $TiO_2$ (titania) of the titanium source powder and the total amount of the amount converted to $Al_2O_3$ (alumina) of an Al component contained in powder of a compound serving as a magnesium source and an aluminum source and the amount converted to $Al_2O_3$ (alumina) of aluminum source powder is adjusted so as to be in the above-described range of the raw material mixture.

In the method of manufacturing the honeycomb structure of the invention, as the magnesium source powder, only one type may be used, or two or more types may be used together.

The particle size of the magnesium source powder is not particularly limited, but the magnesium source powder of which the particle size (D50) corresponding to 50% of the cumulative percentage based on the volume, measured by the laser diffraction, is in the range of 0.5 to 30 $\mu$m is generally used, it is desirable to use the magnesium source powder in which D50 is in the range of 3 to 20 $\mu$m from the viewpoint of reducing the sintering contraction rate of the molded article of the raw material mixture.

(Mixing ratio of magnesium source powder with respect to aluminum source powder and titanium source powder)

The mole ratio of the content converted to MgO (magnesia) of the magnesium source powder in the raw material mixture used in the method of manufacturing the honeycomb structure of the invention with respect to the total amount of the aluminum source powder in terms of $Al_2O_3$ (alumina) and the titanium source powder in terms of $TiO_2$ (titania) is desirably 0.03 to 0.15, and more desirably 0.03 to 0.12. By adjusting the content of the magnesium source powder so as to be in this range, heat resistance is further improved, and an aluminum titanate ceramic sintered body having a large pore size and a large porosity can be comparatively easily obtained.

(Silicon source powder)

Further, the raw material mixture which is used in the method of manufacturing the honeycomb structure of the invention may further contain silicon source powder. The silicon source powder is powder of a compound which is led to a silicon component and is contained in an aluminum titanate ceramic sintered body, and an aluminum titanate ceramic sintered body having further improved heat resistance can be obtained by the usage of the silicon source powder. Examples of the silicon source powder include powder of silicon oxide (silica) such as silicon dioxide and silicon monoxide.

Further, the silicon source powder may be powder of a compound led to silica by being solely sintered in air. Examples of such a compound include silicate, silicon carbide, silicon nitride, silicon sulfide, silicon tetrachloride, silicon acetate, sodium silicate, sodium orthosilicate, feldspar, glass frit and the like. Among them, feldspar, glass frit and the like are desirably used, and glass frit and the like are more desirably used due to the easy industrial availability and the stable composition. The glass frit indicates a flake or powder phase glass which can be obtained by crushing glass. As the silicon source powder, powder composed of a mixture of feldspar and glass frit is desirably used.

In a case of using the glass frit, from the viewpoint of further improving thermal decomposition-resistance of the obtained aluminum titanate ceramic sintered body, it is desirable to use glass frit having a deformation point of 600°C or more. In the specification, the deformation point of glass frit is defined as a temperature at which the expansion of glass frit is measured from the low temperature by using a thermo mechanical analysis (TMA), the expansion stops, and then the contraction starts.

As glass forming the glass frit, general silicate glass mainly containing silicate $[SiO_2]$ (50 mass% or more of the entire component) can be used. The glass forming glass frit may contain alumina $[Al_2O_3]$, sodium oxide $[Na_2O]$, potassium oxide $[K_2O]$, calcium oxide $[CaO]$, magnesia $[MgO]$ and the like, as other component, as in the general silicate glass. Further, the glass forming glass frit may contain $ZrO_2$ since it improves the hot water resistance of the glass.

In the method of manufacturing the honeycomb structure of the invention, as the silicon source powder, only one type may be used, or two or more types may be used together.

The particle size of silicon source powder is not particularly limited, but silicon source powder of which the particle size (D50) corresponding to 50% of the cumulative percentage based on the volume, measured by the laser diffraction, is in the range of 0.5 to 30 $\mu$m is generally used, and it is desirable to use silicon source powder of which D50 is in the range of 1 to 20 $\mu$m in order to further improve a charging rate of a molded article of a raw material mixture and obtain a sintered body having higher mechanical strength.

(Mixing ratio of silicon source powder with respect to aluminum source powder and titanium source powder)

In a case where the raw material mixture used in the method of manufacturing the honeycomb structure of the invention contains silicon source powder, the content converted to $SiO_2$ (silica) of the silicon source powder in the raw material mixture with respect to the total amount of 100 parts by mass of the aluminum source powder in terms of $Al_2O_3$ (alumina) and the titanium source powder in terms of $TiO_2$ (titania) is generally 0.1 to 10 parts by mass, and desirably 0.1 to 5 parts by mass. The silicon source powder may contain a minor component which is inevitably contained in a raw material derived or manufacturing process.

(Other raw material)

In the method of manufacturing the honeycomb structure of the invention, a compound containing two or more metal elements of titanium, aluminum, silicon and magnesium can be used as raw material powder, as in complex oxide such as magnesia spinel $(MgAl_2O_4)$. In this case, it can be considered that such a compound is the same as a raw material mixture obtained by mixing respective metal source compounds. Based on this concept, the contents of an aluminum source raw material, a titaninum source raw material, a magnesium source raw material and a silicon source raw material in the raw material mixture are adjusted in the above-described range.

Further, the raw material mixture used in the method of manufacturing the honeycomb structure of the invention may contain aluminum titanate or aluminum magnesium titanate, for example, in a case where aluminum magnesium titanate is used as a constituent of the raw material mixture, the aluminum magnesium titanate corresponds to a raw material serving as a titanium source, an aluminum source and a magnesium source.

The aluminum titanate or the aluminum magnesium titanate may be obtained from the honeycomb structure obtained by the manufacturing method of the invention. For example, in a case where the honeycomb structure obtained by the manufacturing method of the invention is cracked, the damaged honeycomb structure and the fragments thereof can be used by being crushed. The powder obtained in this way is used as the aluminium magnesium titanate powder.

<Other components to be mixed>

In the method of manufacturing the honeycomb structure of the invention, for example, an organic component (addition agent) such as binder, plasticizer, disperser and solvent may be further mixed in the raw material mixture in addition to the ceramic powder and the pore-forming agent described above.

(Binder)

Examples of the binder include celluloses such as methylcellulose, carboxymethyl cellulose and sodium carboxymethyl cellulose; alcohols such as polyvinyl alcohol; salt such as lignin sulfonate; wax such as paraffin wax and microcrystalline wax; and the like. The addition amount of the binder is generally 20 parts by mass or less, and desirably 15 parts by mass or less, with respect to the total amount of 100 parts by mass of the aluminum source powder, the titanium source powder, the magnesium source powder and silicon source powder.

(Plasticizer)

Examples of the plasticizer include alcohols such as glycerin; high fatty acid such as caprylate, laurate, palmitate, alginate, oleate and stearate; stearate metal salt such as stearate Al; and the like. The addition amount of the plasticizer is generally 0 to 10 parts by mass, and desirably 1 to 5 parts by mass, with respect to the total amount of 100 parts by mass of the aluminum source powder, the titanium source powder, the magnesium source powder and the silicon source powder.

(Disperser)

Examples of the disperser include inorganic acid such as nitric acid, hydrochloric acid and sulfuric acid; organic acid such as oxalic acid, citric acid, acetic acid, malic acid and lactic acid; alcohols such as methanol, ethanol and propanol; a surface acting agent such as ammonium polycaroxylate and polyoxyalkylene alkyl ether; and the like. The addition amount of the disperser is generally 0 to 20 parts by mass, and desirably 2 to 8 parts by mass, with respect to the total amount of 100 parts by mass of the aluminum source powder, the titanium source powder, the magnesium source powder and the silicon source powder.

(Solvent)

Further, as the solvent, water is generally used, and ion-exchange water is desirably used from the viewpoint of small amount of impurities. The amount of the solvent used is generally 10 to 100 parts by mass, and desirably 20 to 80 parts by mass, with respect to the total amount of 100 parts by mass of the aluminum source powder, the titanium source powder, the magnesium source powder and the silicon source powder.

(Description of manufacturing step)

In the method of manufacturing the honeycomb structure of the invention, a molding step, a degreasing step and a sintering step are performed in this order. Hereinafter, the respective steps of the method of manufacturing the honeycomb structure of the invention will be described in detail.

(Molding step)

In the method of manufacturing the honeycomb structure of the invention, the raw material mixture which is provided for molding can be obtained by kneading a pore-forming agent, aluminum source powder, titanium source powder, an inorganic component such as magnesium source powder and silicon source powder which are arbitrarily used, and various organic components (addition agents) which are arbitrarily used. That is, in the molding step, the raw material mixture can be obtained by mixing at least small particle size powder (first pore-forming agent) having a median particle size of 5 to 20 $\mu$m, large particle size powder (second pore-forming agent) having a median particle size of 30 $\mu$m or more and a ninety-percentage particle size of 80$\mu$m or less, and ceramic powder. By using such a raw material mixture, the ratio of the total volume of the pore having a pore size of 5 to 25 $\mu$m with respect to the total volume of the entire pores can be adjusted to be 10% or more, and the ratio of the total volume of the pore having a pore size of 50 to 100 $\mu$m with respect to the total volume of the entire pores can be adjusted to 15 to 30%.

In the method of manufacturing the honeycomb structure of the invention, a ceramic molded article is obtained by molding the raw material mixture obtained by kneading the aluminum source powder, the titanium source powder, the inorganic component such as the magnesium source powder and silicon source powder which are arbitrarily used, the pore-forming agent, and the like, and then the molded article is subjected to the degreasing step and the sintering step, thereby obtaining an aluminum titanate ceramic sintered body. By conducting sintering after molding, it is possible to obtain an aluminum titanate ceramic sintered body having a maintained fine pore shape of a porous aluminum titanate crystal produced by the sintering.

The method of molding the raw material mixture is not particularly limited, however, for example, a so-called extrusion molding method in which a raw material mixture is extruded from a die while kneading by an one-axial extruder may be adopted.

Further, in the molded article which is extruded from the die, the opening of one axial end of each through-hole may be plugged. For example, the mixture similar to the raw material mixture described above may be charged into the opening to be plugged.

In addition, in a case where plasticizer is added as an addition agent into the raw material mixture, many plasticizers can function as lubricant which reduces a friction between the raw material mixture and the die when extruding the raw material mixture out. For example, the above-described respective plasticizers can function as lubricant.

(Degreasing step)

In the method of manufacturing the honeycomb structure of the invention, the molded ceramic molded article is subjected to the degreasing step for removing the pore-forming agent and the like contained in the ceramic molded article (the raw material mixture) before the sintering step. The degreasing step is performed in the atmosphere in which the oxygen concentration is 0.1% or less.
In the specification, "%" used as the unit of the oxygen concentration indicates "vol%". By managing the oxygen concentration in the degreasing step (when the temperature rises) at the concentration of 0.1% or less, the heat generation of an organic material is suppressed, and the crack after degreasing can be suppressed. By performing the degreasing step in the atmosphere in which the oxygen concentration is 0.1% or less, a part of an organic component such as a pore-forming agent is removed in the degreasing step, and the remainder is carbonized and remains in the ceramic molded article. In this way, since a minor amount of carbon remains in the ceramic molded article, the strength of the molded article is improved, and the ceramic molded article is easily provided for the sintering step. Examples of such an atmosphere include an atmosphere of an inert gas such as nitrogen gas and an argon gas; an atmosphere of a reducing gas such as a carbon monoxide gas and a hydrogen gas; and vacuum. Further, the sintering may be performed in the atmosphere in which the water vapor partial pressure is low, and the oxygen concentration may be reduced by being steamed along with charcoal.

With regard to the temperature condition of the degreasing step, it is desirable that the maximum temperature is equal to or more than 700°C and equal to or less than 1100°C. It is more desirable that the maximum temperature is equal to or more than 800°C and equal to or less than 1000°C. When the maximum temperature of the degreasing step increases from about 600 to 700°C in the related art to 700 to 1100°C, the strength of the ceramic molded article after the degreasing step is improved due to the grain growth, and hence the ceramic molded article is easily provided for the sintering step. Further, in order to prevent the crack of the ceramic molded article in the degreasing step, it is desirable to suppress a temperature rising speed to the arrival of the maximum temperature as much as possible.

The degreasing is generally performed by using a furnace which is generally used for general sintering, such as a tubular electric furnace, a box-like electrical furnace, a tunnel furnace, a far-infrared furnace, a microwave heating furnace, a shaft furnace, a reverberating furnace, a rotary furnace, a roller hearth furnace, a gas combustion furnace and the like. The degreasing may be performed in a batch-wise type and may be also performed in a continuous type. Further, the degreasing may be performed in a stationary type and may be also performed in a fluid type.

The time which is necessary for the degreasing may be a time which is sufficient for the disappearance of a part of the organic component contained in the ceramic molded article, and desirably, a time in which the organic component of equal to or more than 90 mass% and equal to or less than 99 mass% contained in the ceramic molded article disappears. Specifically, the time is different depending on the amount of the raw material mixture, the type of the furnace used for the degreasing, the temperature condition, the atmosphere and the like, but the maximum temperature keeping time is generally 1 minute to 10 hours and desirably 1 to 7 hours.

(Sintering step)

In the method of manufacturing the honeycomb structure of the invention, the ceramic molded article is subjected to the sintering step after the degreasing step. The sintering temperature of the sintering step is generally 1300°C or more, and desirably 1400°C or more. Further, the sintering temperature is generally 1650°C or less, and desirably 1550°C or less.
The temperature rising speed to the sintering temperature is not particularly limited, but is generally 1°C/time to 500°C/time. In a case of using silicon source powder, it is desirable to provide a step of maintaining the temperature in the range of 1100 to 1300°C for 3 hours or more before the sintering step. Accordingly, the melting and the spreading of silicon source powder can be promoted.

In the sintering step of the method of manufacturing the honeycomb structure of the invention, it is desirable to perform the sintering in the atmosphere in which the oxygen concentration is equal to or more than 1% and equal to or less than 6%. When the oxygen concentration is set to 6% or less, the combustion of remaining carbide generated by the degreasing step can be suppressed, and hence the ceramic molded article is rarely cracked in the sintering step. Further, since appropriate oxygen exists, it is possible to completely remove the organic component of the aluminum titanate ceramic molded article which is finally obtained. It is desirable that the oxygen concentration is 1% or more since there is no carbide (soot) derived from the organic component in the obtained aluminum titanate ceramic sintered body. Depending on the used raw material powder, that is, the type or the use ratio of the aluminum source powder, the titanium source powder, the magnesium source powder and the silicon source powder, the sintering may be performed in an inert gas such as a nitrogen gas and an argon gas, and may be performed in a reducing gas such as a carbon monoxide gas and a hydrogen gas. Further, the sintering may be performed in the atmosphere in which the water vapor partial pressure is low.

The sintering is generally performed by using a furnace which is generally used for general sintering, such as a tubular electric furnace, a box-like electrical furnace, a tunnel furnace, a far-infrared furnace, a microwave heating furnace, a shaft furnace, a reverberating furnace, a rotary furnace, a roller hearth furnace, a gas combustion furnace and the like. The sintering may be formed in a batch-wise type and may be also performed in a continuous type. Further, the sintering may be performed in a stationary type and may be also performed in a fluid type.

The time necessary for the sintering may be a time which is sufficient for the transition of the molded article of the raw material mixture to the aluminum titanate crystal, and is generally 10 minutes to 24 hours although it is different depending on the amount of the raw material mixture, the type of the baking furnace, the sintering temperature, the sintering atmosphere and the like.

(Others)

By sequentially performing the above-described steps, the honeycomb structure of the invention as an aluminum titanate ceramic sintered body can be obtained. The honeycomb structure of the invention has a shape in which the shape of the molded article immediately after the molding is substantially maintained, but a desired shape may be obtained by performing a grinding process or the like after the sintering.

**Example**

With regard to the honeycomb structure (Examples 1 and 2: a case where the pore-forming agent is the mixed powder containing the large particle size powder and the small particle size powder) manufactured according to the method of manufacturing the honeycomb structure of the invention and the honeycomb structure (Comparative Example 1: a case where the pore-forming agent is single powder) manufactured according to the manufacturing method of the related art, the obtained honeycomb structure was subjected to a structural evaluation (pore size distribution measurement and the like) and a performance evaluation (pressure loss measurement and a soot leakage test).

The invention is not limited to the following examples.

The particle size distribution measurement of the raw material powder, the X-ray diffraction measurement as a method of measuring the structure of the obtained honeycomb structure, the pore size distribution measurement and the X-ray CT measurement, the pressure loss measurement and the soot leakage test as the performance evaluation method used in Examples or Comparative Example are as below.

(1) Measurement of particle size distribution of raw material powder

The particle size (D50) corresponding to 50% of the cumulative percentage, the particle size (D90) corresponding to 90% of the cumulative percentage, and the particle size (D10) corresponding to 10% of the cumulative percentage based on the volume of the raw material powder were measured by laser diffraction particle size distribution measurement equipment (manufactured by Nikkiso Corporation: Microtrac HRA (X-100)).

(2) X-ray diffraction measurement

An aluminum titanate change rate (AT change rate) was obtained by the following equation (1) on the basis of the integration strength ($I_T$) of the peak (titania-rutile phase (110) surface) present at a position of $2\theta = 27.4°$ and the integration strength ($I_{AT}$) of the peak [aluminum magnesium titanate phase (230) surface] present at a position of $2\theta = 33.7°$ in a powder X-ray diffraction spectrum of the powder obtained by crushing a sintered body (honeycomb structure) with a mortar.

$$\text{AT change rate } (\%) = I_{AT} / (I_T + I_{AT}) \times 100 \ldots (1)$$

(3) Pore size distribution measurement

A small piece of about 2 mm-square obtained by crushing a sintered body (honeycomb structure) of 0.4 g was dried in air for four hours at 120°C by an electric furnace, and then the pore diameter was measured in the measurement range of 0.005 to 200.0 $\mu$m by a mercury intrusion method, and the accumulated pore volume $V_{total}$ (ml/g) and the average pore diameter ($\mu$m) were obtained. As the measurement equipment, "AUTOPORE III9420" manufactured by Micromeritics Corporation was used. Based on the obtained accumulated pore volume $V_{total}$, the opened porosity of the porous body (honeycomb structure) was obtained by the following equation (2).

$$\text{opened porosity (vol\%)} = 100 \times (1 - 1/(1 + V_{total} \times D)) \ldots (2)$$

Here, D of the equation (2) indicates the density (g/cm³) of the ceramic body, and the opened porosity was calculated as using the density of 3.7g/cm³ of the general aluminum titanate as D.

(4) X-ray CT measurement

The X-ray CT measurement of the obtained honeycomb structure was performed in the following measurement condition. A test piece was cut out from the partition wall of the honeycomb structure, and the X-ray CT measurement was performed using the test piece as the measurement sample. The size of the test piece was, for example, 1.0 cm x 2.0 cm x 0.3 cm.

(Measurement condition)

    a) Device to be used: three-dimensional measurement X-ray CT device TDM1000-IS/SP (manufactured by Yamato Scientific Co., Ltd.)
    b) Tube voltage: 60 kV
    c) Tube current: 50 μA
    d) Number of pixels: 512 × 512 pixels
    e) Viewing field size: 0.8 mm Φ × 0.8 mmh (height)
    f) Scale (resolution): 1.5 μm/pixel

Based on the result of the X-ray CT measurement, a three-dimensional quantitative analysis was performed, and the pore volume with respect to the pore size was calculated. In the three-dimensional quantitative analysis, a quantitative analysis software TRI/3D-BON, PRT (manufactured by Ratoc System Engineering Co., Ltd.) was used. Here, the diameter of the sphere with a true spherical shape having a volume equal to the obtained pore volume was calculated as the pore size, and as the pore volume distribution, the volume percentage of the total volume of the pores respectively having pore sizes of 5 to 25 μm, 25 to 50 μm, and 50 to 100 μm was calculated with respect to the total pore volume.

(5) Pressure loss measurement

(Hollow piece)

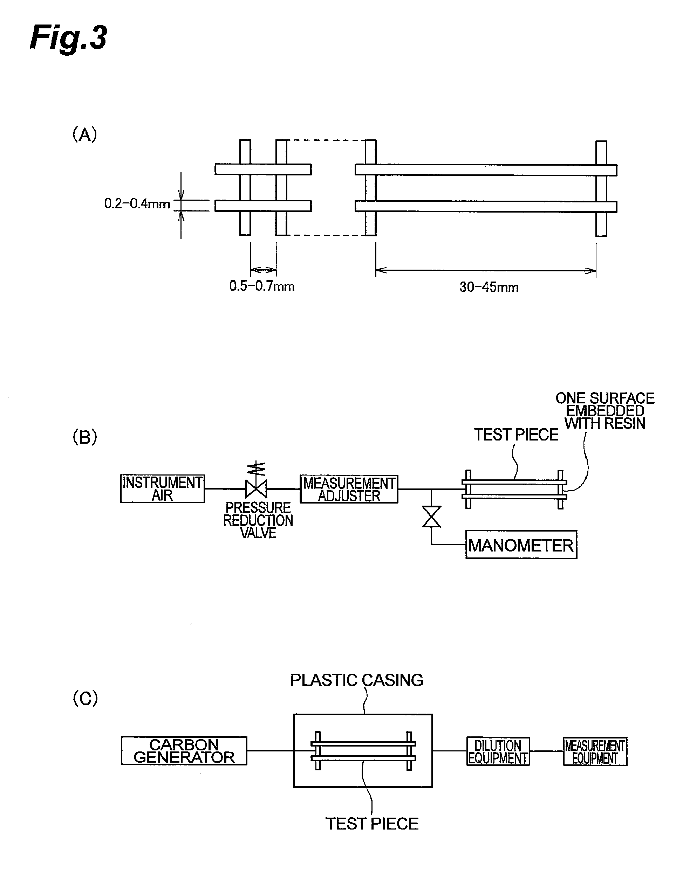

The pressure loss measurement was performed in a manner such that a part of the obtained honeycomb structure was cut out, and a pillar hollow piece (having a length of 30 to 45 mm) as a part of the cut portion was used. The hollow piece is cut into a shape including a part of one cell included in the honeycomb structure and the cell wall (that is, the cell wall dividing the adjacent cells from each other) surrounding the cell. For this reason, the hollow piece has a through-hole which penetrates the hollow piece parallel to the longitudinal direction of the hollow piece. That is, the hollow piece is cut so as to have a cross-sectional shape of a curb shape shown in Fig. 3(A). The thickness of the cell wall is 0.2 to 0.4 mm, and the cross-sectional shape of the through-hole (cell) is a square shape of 0.5 to 0.7 mm.

(Pressure measurement)

In the pressure measurement, first, a test piece was manufactured by sealing one opening end of the through-hole of the hollow piece by an epoxy resin. Then, as shown in Fig. 3(B), the obtained test piece was connected to the device, and the difference (the differential pressure; ΔP (unit: kPa)) between the atmospheric value and the pressure value when the instrument air (the pressure value of 1 MPa) was made to flow into the test piece at the respective flow rates of 250 ml/minute, 500 ml/minute, 750 ml/minute and 950 ml/minute was obtained by a manometer.

(Evaluation method)

As an index indicating the pressure loss, a gradient G calculated as below was used.

First, the gas flow speed u (unit: ms$^{-1}$) when passing the cell wall at each flow rate was calculated from the dimension area. Then, a straight line was obtained by plotting a differential pressure value ΔP/u with respect to the obtained flow speed, and then the gradient G (unit: kPa/(ms$^{-1}$)) of the obtained straight line was calculated. That is, it is shown that, as the value of the gradient G becomes lower, the pressure loss before and after the test piece becomes lower, and the filter performance as the particulate filter is higher.

(6) Soot leakage test

As the soot leakage evaluation method of the obtained honeycomb structure, the test piece used in (5) Pressure loss measurement was connected to the device shown in Fig. 3(C), and the leakage test was performed. By using a carbon generator (DNP-2000 manufactured by PALAS Corporation; 60 nm of average particle size of carbon particle (soot)), dilution equipment (MD-19-1E manufactured by Matter Corporation) and measurement equipment (EEPS-3000 manufactured by TSI Corporation), the number concentration of the carbon particles were measured after 180 seconds from a time when the carbon particles generated from the carbon generator started to pass through the flow channel of the test piece.
It is shown that, as the number concentration after passing through the test piece become lower, the collecting performance as the particulate filter is higher.

<Example 1>

In Example 1, the following raw material powder was used.
As the composition of the following raw material powder, the mole ratio in terms of alumina [$Al_2O_3$], titania [$TiO_2$], magnesia [MgO] and silica [$SiO_2$] was [$Al_2O_3$]/[$TiO_2$]/[MgO]/[$SiO_2$] = 35.1%/51.3%/9.6%/4.0%.
Further, the content percentage of the silicon source powder in the total amount of the aluminum source powder, the titanium source powder, the magnesium source powder and the silicon source powder was 4.0 mass%.

(Raw material powder)

(1) Aluminum source powder

Aluminum oxide powder (α-alumina powder) with median particle size (D50) of 29 μm
38.48 parts by mass

(2) Titanium source powder

Titanium oxide powder (rutile type crystal) with D50 of 1.0 μm
41.18 parts by mass

(3) Magnesium source powder

Magnesium oxide powder with D50 of 3.4 μm
2.75 parts by mass

(4) Silicon source powder

Glass frit (deformation point: 642°C) with D50 of 8.5 μm
3.29 parts by mass

(5) Pore-forming agent (wheat starch powder)

10.30 parts by mass
Pore-forming agent (potato starch powder)
4.0 parts by mass
In Example 1, wheat starch powder was used as small particle size powder, and potato starch powder was used as large particle size powder. The measurement result of the particle size distribution of the wheat starch powder and the potato starch powder was as below.

D50 of wheat starch powder:     19 $\mu$m
D10 of wheat starch powder:     11 $\mu$m
D90 of potato starch powder:    67 $\mu$m
D50 of potato starch powder:    43 $\mu$m
D 10 of potato starch powder:   24 $\mu$m

Further, the total mass of the powder having a particle size of 25 $\mu$m or less in the pore-forming agent was 72% with respect to the total mass of the pore-forming agent.

With regard to the mixture formed of the aluminum source powder, the titanium source powder, the magnesium source powder, the silicon source powder and the pore-forming agent, methylcellulose of 5.49 parts by mass and hydroxy methylcellulose of 2.35 parts by mass were added as a binding agent (binder) and glycerin of 0.40 part by mass and polyoxyethylene polyoxypropylene butyl ether of 4.64 parts by mass were added as lubricant to the mixture of 100 parts by mass. Further, water of 29.03 parts by mass was added as a dispersion medium, and then extruding and molding and performed by using a kneading and extruding unit to form a honeycomb-like ceramic molded article (having a cell density of 300 cpsi and a cell wall thickness of 0.3 mm).

The molded article was formed in a columnar shape having a diameter of 25 mm and a height of 50 mm, and was formed so as to have a plurality of through-holes in the height direction.

The obtained molded article was subjected to sintering including a degreasing step of removing a binder in the atmosphere, thereby obtaining a honeycomb-like porous sintered body (honeycomb structure). During the sintering, the maximum temperature was set to 1500°C, and the maximum temperature keeping time was set to 5 hours.

Powder was obtained by crushing the obtained honeycomb structure with a mortar, the diffraction spectrum of the obtained powder was measured by the powder X-ray diffraction method, and the powder showed a peak of a crystal of aluminum magnesium titanate. The AT change rate of the powder was determined and found to be 100%. The average minute hole diameter of the obtained aluminum titanate sintered body was 15 $\mu$m, and the opened porosity was 44 vol%.

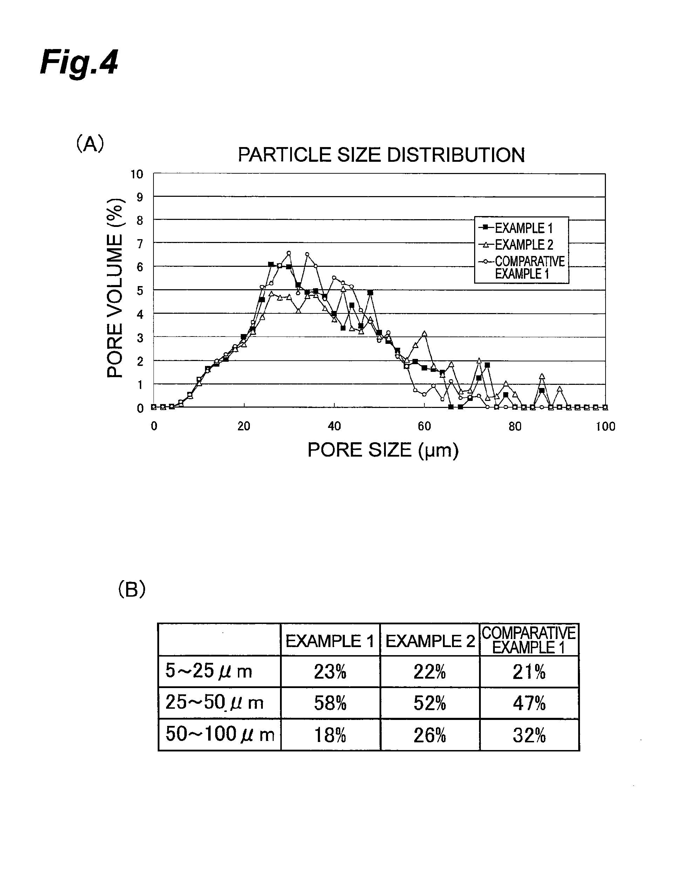

By performing the X-ray CT measurement of the obtained porous sintered body, the distribution of the pore volume with respect to the pore size was calculated, the volume ratio of the pore having a pore size of 5 to 25 $\mu$m was 23%, and the volume ratio of the pore having a pore size of 50 to 100 $\mu$m was 18% (see Fig. 4). Further, the volume ratio of the pore having a pore size of 100 $\mu$m or more was 0%.

Further, the pressure loss measurement of the obtained porous sintered body was performed, and the gradient G was 6.9 kPa/(ms$^{-1}$).

In addition, the obtained porous sintered body was subjected to a soot leakage test, and the number concentration of soot after 180 seconds was $1.0 \times 10^3$ numbers/cm$^3$ or less.

<Example 2>

In Example 2, a honeycomb-like porous sintered body was obtained as in Example 1 except that the mixture ratio of the pore-forming agent was changed, the mixture amount of the respective raw material powders was changed, and the aluminum magnesium titanate powder was added.

As the composition of the respective raw material powders, the mole ratio in terms of alumina [Al$_2$O$_3$], titania [TiO$_2$], magnesia [MgO] and silica [SiO$_2$] was [Al$_2$O$_3$]/[TiO$_2$]/[MgO]/[SiO$_2$] = 35.1%/51.3%/9.6%/4.0%.

Further, the content percentage of the silicon source powder in the total amount of the aluminum source powder, the titanium source powder, the magnesium source powder, the aluminum magnesium titanate powder and the silicon source powder was 4.0 mass%.

(Raw material powder)

(1) Aluminum source powder

Aluminum oxide powder ($\alpha$-alumina powder) with median particle size (D50) of 29 $\mu$m
35.59 parts by mass

(2) Titanium source powder

Titanium oxide powder (rutile type crystal) with D50 of 1.0 $\mu$m
35.27 parts by mass

(3) Magnesium source powder

Magnesium oxide powder with D50 of 3.4 μm

1.82 parts by mass

(4) Silicon source powder

Glass frit (deformation point: 642°C) with D50 of 8.5 μm

2.91 parts by mass

(5) Pore-forming agent (wheat starch powder)

6.0 parts by mass
Pore-forming agent (potato starch powder)
10.0 parts by mass

(6) Aluminum magnesium titanate powder

8.40 parts by mass
As described in the paragraph 0084 of the specification, (6) Aluminum magnesium titanate powder used is the powder obtained by crushing the aluminum titanate ceramic sintered body (the porous sintered body) manufactured by the above-described method.

As the pore-forming agent, the pore-forming agent as in Example 1 was used. Further, the total mass of the powder having a particle size of 25 μm or less in the pore-forming agent was 38% with respect to the total mass of the pore-forming agent.

With regard to the mixture formed of the aluminum source powder, the titanium source powder, the magnesium source powder, the silicon source powder, the aluminum magnesium titanate powder and the pore-forming agent, methylcellulose of 5.49 parts by mass and hydroxy methylcellulose of 2.35 parts by mass were added as a binding agent (binder) and glycerin of 0.40 part by mass and polyoxyethylene polyoxypropylene butyl ether of 4.64 parts by mass were added as lubricant to the mixture of 100 parts by mass. Further, water of 28.45 parts by mass was added as a dispersion medium, and the then extruding and molding and performed by using a kneading and extruding unit to form a honeycomb-like ceramic molded article (having a cell density of 300 cpsi and a cell wall thickness of 0.3 mm).
The molded article was formed in a columnar shape having a diameter of 25 mm and a height of 50 mm, and was formed so as to have a plurality of through-holes in the height direction.
The obtained molded article was subjected to sintering including a degreasing step of removing a binder in the atmosphere, thereby obtaining a honeycomb-like porous sintered body (honeycomb structure). During the sintering, the maximum temperature was set to 1500°C, and the maximum temperature keeping time was set to 5 hours.

By crushing the obtained porous sintered body with a mortar, the powder of aluminum magnesium titanate was obtained. As the composition of the aluminum magnesium titanate powder, the mole ratio of the conversion of alumina, titania, magnesia and silica was $[Al_2O_3]/[TiO_2]/[MgOl/[SiO_2] = 35.1\%/51.3\%/9.6\%/4.0\%$. The diffraction spectrum of the obtained powder was measured by the powder X-ray diffraction method, and the powder showed a peak of a crystal of aluminum magnesium titanate. The AT change rate of the powder was determined and found to be 100%. The average minute hole diameter of the obtained aluminum titanate sintered body was 15 μm, and the opened porosity was 47 vol%.

By performing the X-ray CT measurement of the obtained porous sintered body, the distribution of the pore volume with respect to the pore size was calculated, the volume ratio of the pore having a pore size of 5 to 25 μm was 22%, and the volume ratio of the pore having a pore size of 50 to 100 μm was 26% (see Fig. 4). Further, the volume ratio of the pore having a pore size of 100 μm or more was 0%.

The pressure loss measurement of the obtained porous sintered body was performed, and the gradient G was 6.8 kPa/(ms$^{-1}$).
In addition, the obtained porous sintered body was subjected to a soot leakage test, and the number concentration of soot after 180 seconds was $1.0 \times 10^3$ numbers/cm$^3$ or less.

<Comparative Example 1>

A honeycomb-like porous sintered body was obtained as in Example 1 except that only one type of powder (wheat starch powder) was used as the pore-forming agent. As the pore-forming agent, wheat starch powder as in Example 1 was used.

As the composition of the respective raw material powders, as in Example 1, the mole ratio in terms of alumina [$Al_2O_3$], titania [$TiO_2$], magnesia [MgO] and silica [$SiO_2$] was [$Al_2O_3$]/[$TiO_2$]/[MgO]/[$SiO_2$] = 35.1%/51.3%/9.6%/4.0%.

Further, the content percentage of the silicon source powder in the total amount of the aluminum source powder, the titanium source powder, the magnesium source powder and the silicon source powder was 4.0 mass%.

(Raw material powder)

(1) Aluminum source powder

Aluminum oxide powder ($\alpha$-alumina powder) with median particle size (D50) of 29 $\mu$m
38.48 parts by mass

(2) Titanium source powder

Titanium oxide powder (rutile type crystal) with D50 of 1.0 $\mu$m
41.18 parts by mass

(3) Magnesium source powder

Magnesium oxide powder with D50 of 3.4 $\mu$m
2. 75 parts by mass

(4) Silicon source powder

Glass frit (deformation point: 642°C) with D50 of 8.5 $\mu$m
3.29 parts by mass

(5) Pore-forming agent (wheat starch powder)

14.30 parts by mass

With regard to the mixture formed of the aluminum source powder, the titanium source powder, the magnesium source powder, the silicon source powder and the pore-forming agent, methylcellulose of 5.49 parts by mass and hydroxy methylcellulose of 2.35 parts by mass were added as a binding agent (binder) and glycerin of 0.40 part by mass and polyoxyethylene polyoxypropylene butyl ether of 4.64 parts by mass were added as lubricant to the mixture of 100 parts by mass. Further, water of 29.03 parts by mass was added as a dispersion medium, and then extruding and molding and performed by using a kneading and extruding unit to form a honeycomb-like ceramic molded article (having a cell density of 300 cpsi and a cell wall thickness of 0.3 mm).

The molded article was formed in a columnar shape having a diameter of 25 mm and a height of 50 mm, and was formed so as to have a plurality of through-holes in the height direction.

The obtained molded article was subjected to sintering including a degreasing step of removing a binder in the atmosphere, thereby obtaining a honeycomb-like porous sintered body (honeycomb structure). During the sintering, the maximum temperature was set to 1500°C, and the maximum temperature keeping time was set to 5 hours.

Powder was obtained by crushing the obtained honeycomb structure with a mortar, the diffraction spectrum of the obtained powder was measured by the powder X-ray diffraction method, and the powder showed a peak of a crystal of aluminum magnesium titanate. The AT change rate of the powder was determined and found to be 100%. The average minute hole diameter of the obtained aluminum titanate sintered body was 15 $\mu$m, and the opened porosity was 42 vol%.

By performing the X-ray CT measurement of the obtained porous sintered body, the distribution of the pore volume with respect to the pore size was calculated, the volume ratio of the pore having a pore size of 5 to 25 $\mu$m was 21%, and the volume ratio of the pore having a pore size of 50 to 100 $\mu$m was 32% (see Fig. 4). Further, the volume ratio of the pore having a pore size of 100 $\mu$m or more was 0%.

The pressure loss measurement of the obtained porous sintered body was performed, and the gradient G was 10.5 kPa/(ms$^{-1}$).

In addition, the obtained porous sintered body was subjected to a soot leakage test, and the number concentration of soot after 180 seconds was 1.0 x 10$^3$ numbers/cm$^3$ or less.

(Comparison between Example and Comparative Example)

As described above, in Example 1, the volume ratio of the pore having a pore size of 5 to 25 $\mu$m with respect to the total volume of the entire pores was 10% or more (23%), and the volume ratio of the pore having a pore size of 50 to 100 $\mu$m with respect to the total volume of the entire pores was in the range of 15 to 30% (18%). Further, in Example 2, the volume ratio of the pore having a pore size of 5 to 25 $\mu$m with respect to the total volume of the entire pores was 10% or more (22%), and the volume ratio of the pore having a pore size of 50 to 100 $\mu$m with respect to the total volume of the entire pores was 15 to 30% (26%). That is, in Examples 1 and 2, it was found that the state of the pore in the partition wall obtained based on the result of the X-ray CT analysis satisfied the state of the honeycomb structure of the invention.

On the other hand, in Comparative Example 1, the volume ratio of the pore having a pore size of 5 to 25 $\mu$m was 10% or more (21%), but the volume ratio of the pore having a pore size of 50 to 100 $\mu$m was 32%, which exceeded 30%. That is, in Comparative Example 1, with regard to the state of the pore in the partition wall obtained based on the result of the X-ray CT analysis, it was found that the ratio of the small diameter pore was included in the ratio of the small diameter pore of the honeycomb structure of the invention, but the ratio of the large diameter pore exceeded the ratio of the large diameter pore of the honeycomb structure of the invention.

As described above, in the comparison of Examples 1 and 2 and Comparative Example 1, it was found that the result of the soot leakage test was equivalent ($1.0 \times 10^3$ numbers/cm$^3$ or less), but the value of the gradient G of Examples 1 and 2 was smaller than the value of Comparative Example 1. Specifically, it was found that the value of the gradient G of Examples 1 and 2 was about 2/3 of the value of Comparative Example 1. Accordingly, in Examples 1 and 2, it was found that the pressure loss was smaller than Comparative Example 1.

From this result, it is found that, when the state of the pore in the partition wall of the honeycomb structure is in the state of the invention, the pressure loss can be decreased while highly maintaining the soot collecting efficiency, thereby allowing the structure suitable for the partition wall of the particulate filter to be obtained.

**Industrial Applicability**

The method of manufacturing the honeycomb structure of the invention is appropriate for a method of manufacturing a honeycomb structure suitable for a ceramic filter, for example, an exhaust gas filter which is used to purify an exhaust gas of an internal-combustion engine such as a diesel engine or a gasoline engine; a catalyst carrier; a filtration filter which is used to filter food and drink such as beer; and a selective permeation filter through which a gas component (for example, carbon monoxide, carbon dioxide, nitrogen, oxygen and the like) produced when distilling oil.

**Reference Signs List**

10: FLOW PATH, 11: SMALL DIAMETER PORE, 12: LARGE DIAMETER PORE, 101: PARTITIONWALL

**Claims**

1. A method of manufacturing a honeycomb structure, comprising:

   a step of forming a molded article by molding a raw material containing a ceramic powder and a pore-forming agent; and
   a step of manufacturing a honeycomb structure by sintering the molded article, wherein
   the pore-forming agent is powder formed of a material that disappears at a sintering temperature or less where the molded article is sintered,
   the powder is obtained by mixing a small particle size powder and a large particle size powder,
   a median particle size of which a ratio of a cumulative mass with respect to a total mass of the small particle size powder is 50% is 5 to 20 $\mu$m,
   a median particle size of which a ratio of a cumulative mass with respect to a total mass of the large particle size powder is 50% is 30 $\mu$m or more, and
   a ninety-percentage particle size of which a ratio of a cumulative mass with respect to a total mass of the large particle size powder is 90% is 80 $\mu$m or less.

2. The method of manufacturing a honeycomb structure according to claim 1,
   wherein a total mass of powder having a particle size of 25 $\mu$m or less is 30 to 80% with respect to a total mass of the pore-forming agent.

**3.** The method of manufacturing a honeycomb structure according to claim 1 or 2,
wherein a content of the pore-forming agent in the raw material is 1 to 40 parts by mass with respect to the ceramic powder of 100 parts by mass.

**4.** The method of manufacturing a honeycomb structure according to any one of claims 1 to 3,
wherein a value obtained by dividing the median particle size of the large particle size powder by the median particle size of the small particle size powder is 2.0 or more.

**5.** The method of manufacturing a honeycomb structure according to any one of claims 1 to 4,
wherein a value obtained by dividing a difference between a ten-percentage particle size of which the ratio of the cumulative mass with respect to the total mass of the small particle size powder is 10% and the median particle size of the small particle size powder by the median particle size of the small particle size powder is smaller than 0.7, and
a value obtained by dividing a difference between a ten-percentage particle size of which the ratio of the cumulative mass with respect to the total mass of the large particle size powder is 10% and the median particle size of the large particle size powder by the median particle size of the large particle size powder is smaller than 0.7.

**6.** The method of manufacturing a honeycomb structure according to any one of claims 1 to 5,
wherein a ten-percentage particle size of which the ratio of the cumulative mass with respect to the total mass of the large particle size powder is 10% is larger than the median particle size of the small particle size powder.

**7.** The method of manufacturing a honeycomb structure according to any one of claims 1 to 6,
wherein a median particle size of which a ratio of a cumulative mass with respect to a total mass of the ceramic powder is 50% is smaller than the median particle size of the large particle size powder.

**8.** A honeycomb structure comprising a plurality of partition walls,
wherein, when a volume of a pore existing in the partition walls is calculated based on a result of X-ray CT analysis of the partition walls, a ratio of a total volume of a pore having a pore size of 5 to 25 $\mu$m with respect to a total volume of entire pores is 10% or more, and a ratio of a total volume of a pore having a pore size of 50 to 100 $\mu$m with respect to a total volume of entire pores is 15 to 30%.

**9.** The honeycomb structure according to claim 8,
wherein a ratio of a total volume of a pore having a pore size of 100 $\mu$m or more with respect to a total volume of entire pores is 1% or less.

**10.** The honeycomb structure according to claim 8 or 9,
wherein a porosity of the partition walls is 30 to 70 vol%, and an average pore size of the partition walls is 5 to 25 $\mu$m.

**11.** The honeycomb structure according to any one of claims 8 to 10, containing an aluminum titanate.

**12.** The honeycomb structure according to any one of claims 8 to 11,
wherein a content of aluminum magnesium titanate is 85 to 99 mass%, a content of aluminosilicate is 1 to 5 mass%, a content of aluminum oxide is 5 mass% or less, and a content of titanium dioxide is 5 mass% or less.

**13.** A particulate filter comprising the honeycomb structure according to any one of claims 8 to 12,
wherein an average thickness of the partition walls is 0.1 to 0.5 mm.

# *Fig.1*

(A)

(B)

(C)

# *Fig.2*

# *Fig.3*

(A)

0.2–0.4mm

0.5–0.7mm

30–45mm

(B)

ONE SURFACE
EMBEDDED
WITH RESIN

TEST PIECE

| INSTRUMENT AIR | PRESSURE REDUCTION VALVE | MEASUREMENT ADJUSTER |

MANOMETER

(C)

PLASTIC CASING

| CARBON GENERATOR | | DILUTION EQUIPMENT | MEASUREMENT EQUIPMENT |

TEST PIECE

# Fig.4

(A)

## PARTICLE SIZE DISTRIBUTION

(B)

|  | EXAMPLE 1 | EXAMPLE 2 | COMPARATIVE EXAMPLE 1 |
|---|---|---|---|
| 5~25 $\mu$ m | 23% | 22% | 21% |
| 25~50 $\mu$ m | 58% | 52% | 47% |
| 50~100 $\mu$ m | 18% | 26% | 32% |

# *Fig.5*

(A)

(B)

<table>
<tr><td colspan="2">**INTERNATIONAL SEARCH REPORT**</td><td>International application No.<br>PCT/JP2011/056272</td></tr>
</table>

| A. CLASSIFICATION OF SUBJECT MATTER |
|---|
| $B01D39/20$(2006.01)i, $B01J35/04$(2006.01)i, $B01J35/10$(2006.01)i, $F01N3/02$ (2006.01)i |

According to International Patent Classification (IPC) or to both national classification and IPC

| B. FIELDS SEARCHED |
|---|
| Minimum documentation searched (classification system followed by classification symbols)<br>B01D39/20, B01J35/04, B01J35/10, F01N3/02 |

| Documentation searched other than minimum documentation to the extent that such documents are included in the fields searched |
|---|
| Jitsuyo Shinan Koho        1922–1996    Jitsuyo Shinan Toroku Koho   1996–2011<br>Kokai Jitsuyo Shinan Koho   1971–2011    Toroku Jitsuyo Shinan Koho   1994–2011 |

| Electronic data base consulted during the international search (name of data base and, where practicable, search terms used) |
|---|
|  |

C. DOCUMENTS CONSIDERED TO BE RELEVANT

| Category* | Citation of document, with indication, where appropriate, of the relevant passages | Relevant to claim No. |
|---|---|---|
| A | JP 2009-292709 A  (TYK Corp.),<br>17 December 2009 (17.12.2009),<br>entire text; all drawings<br>(Family: none) | 1-13 |
| A | WO 2010/013509 A1  (Hitachi Metals, Ltd.),<br>04 February 2010 (04.02.2010),<br>entire text; all drawings<br>(Family: none) | 1-13 |
| A | JP 2004-148308 A  (Hitachi Metals, Ltd.),<br>27 May 2004 (27.05.2004),<br>entire text; all drawings<br>& US 2003/0093982 A1    & EP 1293241 A2 | 1-13 |

| ☒  Further documents are listed in the continuation of Box C. | ☐  See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>02 June, 2011 (02.06.11) | Date of mailing of the international search report<br>14 June, 2011 (14.06.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/056272

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2007-290951 A  (Ibiden Co., Ltd.),<br>08 November 2007 (08.11.2007),<br>entire text; all drawings<br>& US 2007/0293392 A1     & EP 1839720 A1 | 1-13 |
| A | JP 2009-255047 A  (Ibiden Co., Ltd.),<br>05 November 2009 (05.11.2009),<br>entire text; all drawings<br>(Family: none) | 1-13 |

Form PCT/ISA/210 (continuation of second sheet) (July 2009)

<table>
<tr><td align="center">**INTERNATIONAL SEARCH REPORT**</td><td>International application No.<br>PCT/JP2011/056272</td></tr>
</table>

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
"Honeycomb structure" as the common matter to define the inventions in claims 1 - 13 is not a special technical feature. Furthermore, there is no other same or corresponding special technical feature among the inventions.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 548 626 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005270755 A
- JP 9077573 A
- JP 2009292709 A